(19) Europäisches Patentamt / European Patent Office / Office européen des brevets

(11) **EP 4 647 270 A1**

(12) **EUROPEAN PATENT APPLICATION**

(43) Date of publication:
**12.11.2025 Bulletin 2025/46**

(21) Application number: **25169926.0**

(22) Date of filing: **11.04.2025**

(51) International Patent Classification (IPC):
***B60C 1/00*** *(2006.01)* ***C08K 3/36*** *(2006.01)*
***C08L 7/00*** *(2006.01)*

(52) Cooperative Patent Classification (CPC):
(C-Sets available)
**C08L 7/00; B60C 1/0016; B60C 11/005;**
**C08K 3/36;** B60C 2011/0025; B60C 2011/0355;
B60C 2200/06 (Cont.)

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **09.05.2024 JP 2024076766**

(71) Applicant: **Sumitomo Rubber Industries, Ltd.**
**Kobe-shi, Hyogo 651-0072 (JP)**

(72) Inventor: **NAGAI, Haruka**
**Kobe-shi, 651-0072 (JP)**

(74) Representative: **Manitz Finsterwald**
**Patent- und Rechtsanwaltspartnerschaft mbB**
**Martin-Greif-Straße 1**
**80336 München (DE)**

(54) **HEAVY-DUTY TIRE**

(57)    Provided is a heavy-duty tire excellent in overall performance of fuel efficiency and abrasion resistance. The heavy-duty tire comprising a tread part, the tread part comprising a rubber layer composed of a rubber composition, the rubber layer comprising a tread surface, the rubber composition comprising: a rubber component comprising a predetermined amount of an isoprene-based rubber; and a filler comprising a predetermined amount of silica, wherein the tread surface comprises circumferential main grooves , a groove depth of a deepest part is less than 16 mm, and the following inequality (1) is satisfied,

$$(1)\ A_{IR} \times A_{SIL} / D_{CG} > 340$$

where $A_{IR}$ represents a content, in % by mass, of the isoprene-based rubber in the rubber component, $A_{SIL}$ represents a content, in % by mass, of the silica in the filler, and $D_{CG}$ represents the groove depth, in mm, of the deepest part of the circumferential main grooves.

EP 4 647 270 A1

(52) Cooperative Patent Classification (CPC): (Cont.)

C-Sets
**C08K 3/36, C08L 7/00;**
**C08L 7/00, C08L 9/00, C08K 3/36, C08K 3/04,**
**C08K 5/548;**
**C08L 7/00, C08L 9/06, C08L 9/00, C08K 3/36,**
**C08K 3/04, C08K 5/548**

**Description**

CROSS-REFERENCE TO RELATED APPLICATIONS

This application claims priority to JP Application No. 2024-076766, filed on May 9, 2024, the disclosure of which is expressly incorporated herein by reference in its entirety.

TECHNICAL FIELD

The present invention relates to a heavy-duty tire.

BACKGROUND OF THE INVENTION

Due to environmental regulation, introduction of a labeling system, and handling of carbon neutrality, a demand for fuel efficiency of a heavy-duty tire to be used has been further increasing even in large vehicles such as a truck, a bus, and the like. For example, JP 2022-114651 A describes a heavy-duty pneumatic tire whose tread part consists of a cap rubber layer and a base rubber layer which satisfy predetermined conditions such as modulus and the like, thereby improving fuel efficiency.

SUMMARY OF THE INVENTION

However, since abrasion resistance has a trade-off relationship with fuel efficiency in compounding formulation for which emphasis is placed on fuel efficiency, it is important to achieve both of fuel efficiency and abrasion resistance. Moreover, from the viewpoint of sustainability, attention to usage rates of naturally-derived materials and recyclable materials has also been increasing.

It is an object of the present invention to provide a heavy-duty tire that is excellent in overall performance of fuel efficiency and abrasion resistance.

The present invention relates to the following heavy-duty tire.

A heavy-duty tire comprising a tread part,

the tread part comprising a rubber layer composed of a rubber composition,
the rubber layer comprising a tread surface,
the rubber composition comprising: a rubber component comprising an isoprene-based rubber; and a filler comprising silica,
wherein a content of the isoprene-based rubber in the rubber component is greater than 85% by mass,
wherein a content of the silica in the filler is greater than 60% by mass,
wherein the tread surface of the tread part comprises two or more circumferential main grooves extending continuously in a tire circumferential direction, and a groove depth of a deepest part of the circumferential main grooves is less than 16 mm, and
wherein $A_{IR}$, $A_{SIL}$, and $D_{CG}$ satisfy the following inequality (1),

$$(1)\ A_{IR} \times A_{SIL} / D_{CG} > 340$$

where $A_{IR}$ represents the content, in % by mass, of the isoprene-based rubber in the rubber component, $A_{SIL}$ represents the content, in % by mass, of the silica in the filler, and $D_{CG}$ represents the groove depth, in mm, of the deepest part of the circumferential main grooves.

According to the present invention, a heavy-duty tire can be provided which is excellent in overall performance of fuel efficiency and abrasion resistance.

BRIEF DESCRIPTION OF THE DRAWINGS

FIG. 1 is a cross-sectional view of a heavy-duty tire relating to one embodiment of the present invention taken along a plane including the tire rotation axis.
FIG. 2 is a developed view of a tread part of the tire in FIG. 1.

FIG. 3 is a cross-sectional view along the C1-C1 line shown in FIG. 2.

FIG. 4 is a cross-sectional view along the C2-C2 line shown in FIG. 2.

FIG. 5 is a conceptual view showing a configuration of a reinforcing layer with a tread surface being as the front.

DETAILED DESCRIPTION

A heavy-duty tire that is one embodiment of the present invention will be described below. The heavy-duty tire of the present embodiment is a heavy-duty tire comprising a tread part, the tread part comprising a rubber layer composed of a rubber composition, the rubber layer comprising a tread surface, the rubber composition comprising: a rubber component comprising an isoprene-based rubber; and a filler comprising silica, wherein a content of the isoprene-based rubber in the rubber component is greater than 85% by mass, wherein a content of the silica in the filler is greater than 60% by mass, wherein the tread surface of the tread part comprises two or more circumferential main grooves extending continuously in a tire circumferential direction, and a groove depth of a deepest part of the circumferential main grooves is less than 16 mm, and wherein $A_{IR}$, $A_{SIL}$, and $D_{CG}$ satisfy the following inequality (1),

$$(1)\ A_{IR} \times A_{SIL} / D_{CG} > 340$$

where $A_{IR}$ represents the content, in % by mass, of the isoprene-based rubber in the rubber component, $A_{SIL}$ represents the content, in % by mass, of the silica in the filler, and $D_{CG}$ represents the groove depth, in mm, of the deepest part of the circumferential main grooves.

Although it is not intended to be bound by a theory, in the present invention, the following can be considered as a mechanism by which the overall performance of fuel efficiency and abrasion resistance is improved. That is, (A) the content of the isoprene-based rubber is set to be greater than 85% by mass, which is considered to contribute to securement of rubber strength satisfactory for a heavy-duty tire and a reduction in heat generation by the rubber component. (B) Since heat generation of the silica is low in the filler, the content of the silica in the filler is set to be greater than 60 % by mass, which is considered to contribute to a reduction in heat generation by the rubber. (C) Since molecules of isoprene-based rubbers are larger than those of synthetic rubbers, a space in the rubber is large, and its density is low. Therefore, the larger the amount of the isoprene-based rubber is, the easier it becomes for the rubber component to take silica in, and an area in which silica can disperse becomes large, which is considered to contribute to a reduction in heat generation by the rubber. (D) When the groove depth of the deepest part of the circumferential main grooves is less than 16 mm, block rigidity of a tread pattern is increased, which is considered to contribute to a reduction in rolling resistance and an improvement in abrasion resistance. Then, the content of the isoprene-based rubber, the content of the silica in the filler, and the depth of the deepest part of the circumferential main grooves are balanced with one another so as to satisfy the inequality (1), whereby (A) to (D) cooperate with one another, so that it is considered that heat generation and abrasion resistance are improved with a good balance.

The right side in the inequality (1) is preferably 400, more preferably 500. When the inequality (1) is satisfied under a stricter condition, it is considered that an effect of the present invention on improving heat generation and abrasion resistance with a good balance is further exhibited.

A hardness of the rubber composition is preferably 64 or more and 80 or less. The higher the hardness is, the more the deformation of the rubber is suppressed, which leads to a reduction in rolling resistance. Therefore, the hardness is preferably 64 or more. On the other hand, when the hardness is 80 or more, the rubber is less likely to elongate, and chipping and cracking become disadvantageous. Therefore, the hardness is preferably 80 or less.

An average primary particle size of silica is preferably less than 16 nm. When silica with a small particle size is used, it is considered that abrasion resistance can be improved while suppressing heat generation of the rubber.

$A_{SIL}$ is preferably greater than 70, more preferably greater than 80, further preferably greater than 90. An increase in content of the silica in the filler is considered to further contribute to suppression of heat generation of the rubber.

$A_{IR}$ is preferably greater than 90. An increase in content of the isoprene-based rubber is considered to further contribute to securement of rubber strength satisfactory for a heavy-duty tire and a reduction in heat generation by the rubber component.

$D_{CG}$ is preferably less than 13, more preferably less than 10. The block rigidity of the tread pattern is further increased, which is therefore considered to contribute to a reduction in rolling resistance and an improvement in abrasion resistance.

It is preferable that the tread surface of the tread part comprises at least one flask-like circumferential groove extending in a tire circumferential direction and that the flask-like circumferential groove comprises a neck part having a narrow groove width, and a trunk part arranged on an inner side in a tire radial direction with respect to the neck part and having a part with a groove width larger than the maximum groove width of the neck part. Since groove walls in mint condition mutually close during grounding contact, a reduction in tread rigidity can be suppressed, which is considered to work favorably for fuel efficiency and abrasion resistance. On the other hand, as abrasion progresses, groove widths become wide. As a result, an excessive increase in tread rigidity due to a decrease of the remaining grooves can be suppressed. Therefore, it is considered that fuel efficiency and abrasion resistance can be maintained while suppressing an influence on other performances.

It is preferable that the tread surface of the tread part comprises at least one flask-like width direction sipe extending in a tire width direction and that the flask-like width direction sipe comprises a neck part having a narrow groove width, and a trunk part arranged on an inner side in the tire radial direction with respect to the neck part and having a part with a groove width larger than the maximum groove width of the neck part. Since groove walls in mint condition mutually close during grounding contact, a reduction in tread rigidity can be suppressed, which is considered to work favorably for fuel efficiency and abrasion resistance. On the other hand, as abrasion progresses, groove widths become wide. As a result, an excessive increase in tread rigidity due to a decrease of the remaining grooves can be suppressed. Therefore, it is considered that fuel efficiency and abrasion resistance can be maintained while suppressing an influence on other performances.

It is preferable that the tread surface of the tread part comprises at least one of at least one flask-like circumferential groove extending in the tire circumferential direction and at least one flask-like width direction sipe extending in the tire width direction, that each of the flask-like circumferential groove and the flask-like width direction sipe comprises a neck part having a narrow groove width, and a trunk part arranged on an inner side in the tire radial direction with respect to the neck part and having a part with a groove width larger than the maximum groove width of the neck part, and that when, among the two or more circumferential main grooves, a pair of circumferential main grooves located on the outermost sides in the tire width direction is referred to as "outermost circumferential main grooves" and a region on the inner side in the tire width direction on a tread surface, which is partitioned off by the pair of the outermost circumferential main grooves, is referred to as a "center region", at least one of the flask-like circumferential groove and the flask-like width direction sipe is present on the center region. Since a grounding pressure is high on the center region of the tread surface, it is considered that contributions of the flask-like circumferential groove and the flask-like width direction sipe to fuel efficiency and abrasion resistance are easily brought out.

It is preferable that the heavy-duty tire comprises a reinforcing layer on an inner side of the tread part in the tire radial direction and that the reinforcing layer comprises a band ply comprising a helically-wound band cord. A grounding pressure can be reduced by suppressing expansion of the tire, which is considered to work favorably for fuel efficiency and abrasion resistance.

It is preferable that the reinforcing layer comprises a plurality of belt plies comprising many belt cords arranged in parallel and that at least one layer of the belt plies is arranged on an inner side of the band ply in the tire radial direction. When at least one layer of the belt plies is arranged on the inner side of the band ply in the tire radial direction, a carcass whose cord has an inclination angle of approximately 90° with respect to a tire equatorial plane no longer directly touches the band ply whose cord has an inclination angle of approximately 0° with respect to the tire equatorial plane, so that an influence of strain caused by the difference in angle of cord is reduced. Therefore, it is considered that such an arrangement works favorably not only for durability but also for fuel efficiency.

In the present specification, numerical values of upper limits and lower limits related to "or more", "or less", and "to" for the descriptions of numerical ranges can be arbitrarily combined with each other, and additionally, numerical values in Examples can be also combined with these upper limits and these lower limits. Moreover, in a case where a numerical range is specified using the word "to", unless otherwise noted, such a case means that numerical values at both ends of the numerical range are included in the numerical range. Additionally, in the present specification, a numerical range shown as a range including the values at its both ends can be interpreted as simultaneously showing a numerical range only including either one of the numerical values at its both ends and a numerical range not including both of the numerical values at its both ends as long as such a range is not inconsistent with the spirit of the present invention.

[Definition]

A "tread part" refers to a member comprising a part forming a tread surface of a tire and is a member arranged on the outer side, on a cross section in a tire radial direction, with respect to tire skeleton-reinforcing and forming members such as a reinforcing layer, a carcass, and the like when any of the tire skeleton-reinforcing and forming members is arranged on the inner side in the tire radial direction.

A "standardized state" is a state in which the tire is rim-assembled to a standardized rim, filled with air at a standardized internal pressure, and applied with no load.

A "dimension of each part of a tire" is, for one appearing on the outer surface of the tire, a value specified in a standardized state, unless otherwise specified, while it is, for one present inside the tire or on a tire cutting surface, a value specified, for example, in a condition where the tire is cut on a plane including a tire rotation axis and the cut tire piece is held with a rim width of a standardized rim.

A "standardized rim" is a rim, in a standard system including a standard on which the tire is based, defined for each tire by the standard. For example, the "standardized rim" refers to a standard rim of an applicable size described in "JATMA YEAR BOOK" in JATMA (The Japan Automobile Tyre Manufacturers Association, Inc.), "Measuring Rim" described in "STANDARDS MANUAL" in ETRTO (The European Tyre and Rim Technical Organisation), or "Design Rim" described in "YEAR BOOK" in TRA (The Tire and Rim Association, Inc.), to which references are made in this order, and if there is an applicable size at the time of the reference, the rim conforms to its standard. Besides, in a case of a tire that is not defined by the standard, the "standardized rim" shall refer to a rim having the narrowest rim width among rims that can be rim-assembled to the tire, that can maintain an internal pressure (that is, do not cause air leakage between the rim and the tire), and that have the smallest rim diameter.

A "standardized internal pressure" is an air pressure, in a standard system including a standard on which the tire is based, defined for each tire by the standard, for example, it refers to a "MAXIMUM AIR PRESSURE" in JATMA, "INFLATION PRESSURE" in ETRTO, or a maximum value described in Table "TIRE LOAD LIMITS AT VARIOUS COLD INFLATION PRESSURES" in TRA, to which references are made in this order as in the case of the standardized rim, and if there is an applicable size at the time of the reference, the standardized internal pressure conforms to its standard. Besides, in the case of tires that are not defined by the standard, the standardized internal pressure shall refer to a standardized internal pressure (250 KPa or more) of another tire size (specified in the standard) for which the standardized rim is described as a standard rim, and when a plurality of standardized internal pressures of 250 KPa or more are described, it shall refer to the minimum value among them.

A "standardized load" is a load, in a standard system including a standard on which the tire is based, defined for each tire by the standard, for example, a "MAXIMUM LOAD CAPACITY" in JATMA, a "LOAD CAPACITY" in ETRTO, or a maximum value described in Table "TIRE LOAD LIMITS AT VARIOUS COLD INFLATION PRESSURES" in TRA, to which references are made in this order as in cases of a standardized rim and a standardized internal pressure, and if there is an applicable size at the time of the reference, the load conforms to its standard. Then, in the case of tires that are not defined by the standard, a maximum load capacity $W_L$ obtained by another calculation is defined as a standardized load.

A "maximum load capacity $W_L$" is calculated by the following equations. "V" represents a virtual volume, in mm³, of a tire, "Dt" represents a tire outer diameter, in mm, in a standardized state, "Ht" represents a cross-sectional height, in mm, of the tire in a tire radial direction on a cross section of the tire taken along a plane including a tire rotation axis, and "Wt" represents a cross-sectional width, in mm, of the tire in the standardized state. When R represents a rim diameter of the tire, Ht can be calculated by the following equation: (Dt-R)/2. Wt is a value obtained by excluding, if any, patterns, letters, or the like on the side surface of the tire. Besides, the maximum load capacity has the same meaning as a standardized load.

$$W_L = 0.000011 \times V + 175$$

$$V = \{(Dt/2)^2 - (Dt/2 - Ht)^2\} \times \pi \times Wt$$

A "content $A_{IR}$, in % by mass, of an isoprene-based rubber in a rubber component" refers to a content of an isoprene-based rubber present in a rubber component.

A "content $A_{SIL}$, in % by mass, of silica in a filler" refers to a content of silica present in a filler.

A "tread ground-contacting end" means a ground-contacting position located on each of outermost sides in a tire width direction when a standardized load is applied to a tire in a standardized state and the tire comes into contact with a flat surface at a camber angle of 0° (Te).

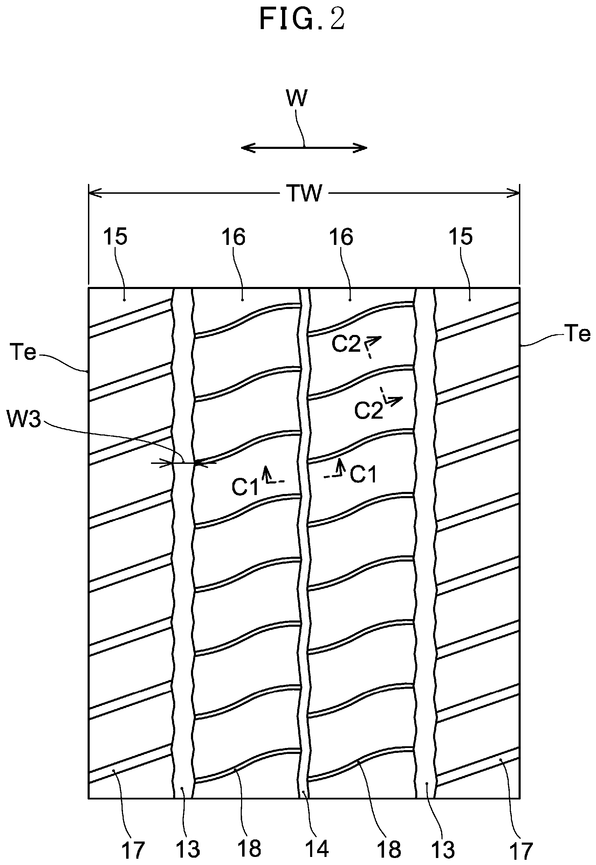

A "circumferential main groove" means a groove that extends continuously in a tire circumferential direction and whose groove width perpendicular to its extending direction has a maximum value (W3 in FIG. 2) that is greater than 2.0% of a tread ground-contacting width TW in mint condition of a tire.

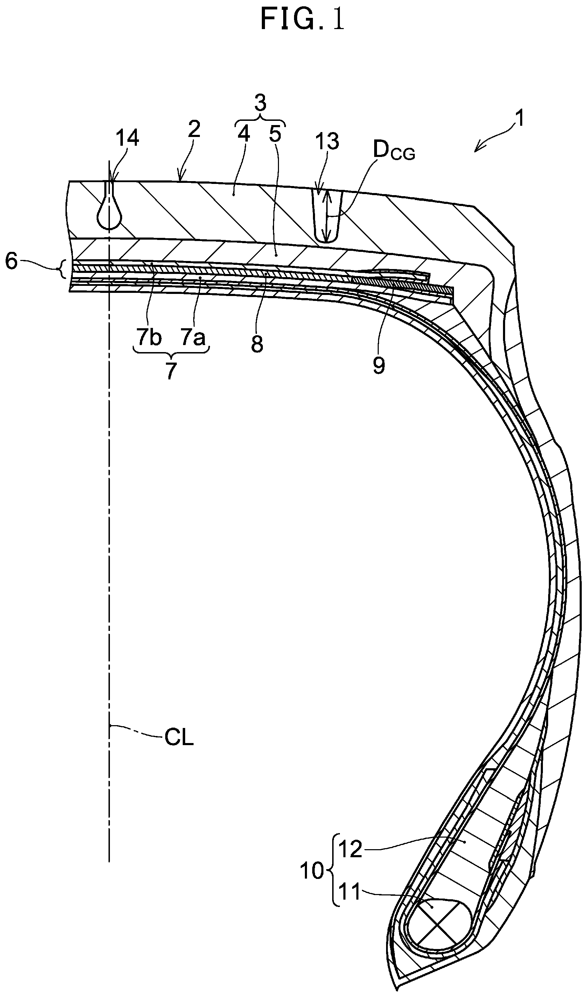

A "depth $D_{CG}$ of a deepest part of circumferential main grooves" refers to a depth, in mm, of the deepest circumferential main groove and is, for example, a distance represented by $D_{CG}$ of FIG. 1.

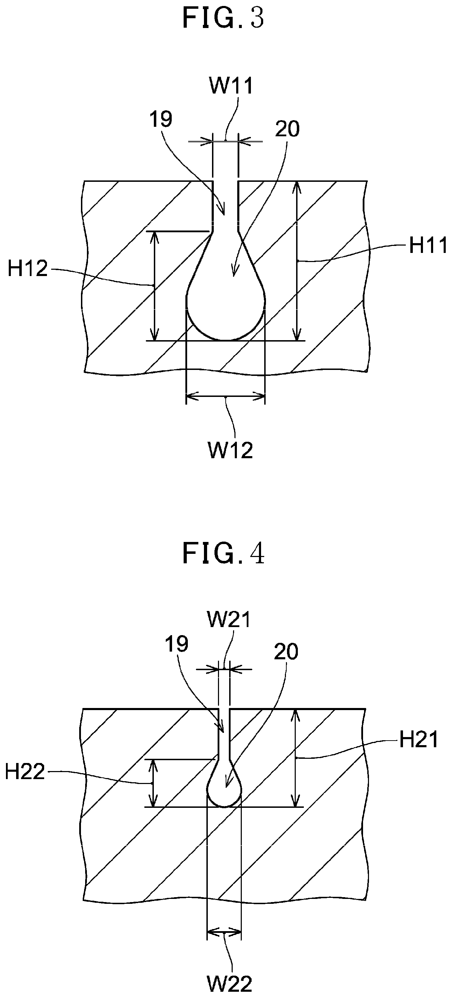

A "flask-like circumferential groove" refers to a groove extending in the tire circumferential direction and comprising a neck part having a narrow groove width and a trunk part arranged on an inner side in the tire radial direction with respect to the neck part and having a part with a groove width larger than the maximum groove width of the neck part. Here, the wording "the trunk part having a part with a groove width larger than the maximum groove width of the neck part" means that the trunk part is configured to have a part whose width is wider than the maximum groove width of the neck part. Accordingly, the maximum groove width of the neck part is less than the maximum groove width of the trunk part, and the groove width of the neck part is narrow in this sense. Regarding the groove width of the neck part of the flask-like circumferential groove, the groove width perpendicular to its extending direction (W11 in FIG. 3) is 2.0% or less of the tread ground-contacting width TW in mint condition of a tire.

A "lug groove" means a groove-like body that extends at least in the tire width direction and whose groove width perpendicular to its extending direction is 1.5 mm or more in mint condition of a tire.

A "sipe" means a notch-like body that extends at least in the tire width direction and whose width perpendicular to its extending direction is smaller than 1.5 mm in mint condition of a tire.

A "flask-like width direction sipe" refers to a sipe extending in the tire width direction and comprising a neck part having a narrow groove width and a trunk part arranged on an inner side in the tire radial direction with respect to the neck part and having a part with a groove width larger than the maximum groove width of the neck part. Here, the meaning of the wording "the trunk part having a part with a groove width larger than the maximum groove width of the neck part" is as described in the previous paragraph. Regarding the groove width of the neck part of the flask-like width direction sipe, the groove width perpendicular to its extending direction (W21 in FIG. 4) is less than 1.5 mm in mint condition of a tire.

A "land part" refers to an area on the tread surface, the area being partitioned off by circumferential main grooves, and a pair of land parts located on the tread ground-contacting end-sides is referred to as "shoulder land part" and a land part located on an inner side with respect to the shoulder land parts is referred to as a "center land part".

A "reinforcing layer" refers to a layer reinforcing a tire structure provided on an inner side of a tread in the tire radial direction and is typically constituted by a belt ply, a band ply, or the like. Here, a "belt ply" refers to a tire member in which a belt cord is coated with a belt-coating rubber, and a "band ply" refers to a tire member in which a band cord is coated with a band-coating rubber. The reinforcing layer is arranged on an outer side of a carcass in the tire radial direction, the carcass forming a tire skeleton.

A "softening agent" is a material giving a rubber component plasticity and includes both a plasticizing agent that is liquid (in a liquid state) at 25°C and a plasticizing agent that is solid at 25°C. Examples of the softening agent include a resin, an oil, a liquid rubber, an ester-based plasticizing agent, and the like. A "content of a softening agent" also includes an amount of a softening agent that is contained in a rubber component extended by the softening agent.

[Measuring method]

A "hardness of a rubber composition" is a Shore hardness (Hs) that is measured under a condition of a temperature at 23°C using a type A durometer in accordance with JIS K 6253-3:2012. In a case where a sample for measurement is prepared from a tread of a tire, a tread rubber is cut out of a surface-side part forming a ground-contacting surface of the tire so that a tire radial direction becomes a thickness direction, and measurement is performed while pressing the type A durometer against the sample from the ground-contacting surface side.

A "styrene content" is calculated by pyrolysis gas chromatography. Besides, in the present specification, "pyrolysis gas chromatography" refers to a method of heating a sample by a pyrolysis device, separating individual components contained in a gas-phase component generated by this heating from one another using a separation column, and analyzing each isolated component.

A "vinyl content (1,2-bond butadiene unit amount)" also is calculated by pyrolysis gas chromatography similarly.

A "cis content (cis-1,4-bond content)" is a value calculated in accordance with JIS K 6239-2:2017 by an infrared absorption spectrometry and is applied to, for example, a rubber component having a repeating unit derived from butadiene such as a BR and the like.

A "glass transition temperature Tg" is a value calculated in accordance with JIS K 7121 by differential scanning calorimetry (DSC) and is applied to, for example, an SBR. For example, in a case where an SBR comprises an extending oil, measurement is made for a sample from which the extending oil is removed using acetone in accordance with JIS K 6229.

A "weight-average molecular weight (Mw)" can be calculated in terms of a standard polystyrene based on measurement values obtained by a gel permeation chromatography (GPC) (for example, GPC-8000 Series manufactured by Tosoh Corporation, detector: differential refractometer, column: TSKgel (Registered Trademark) SuperMultiporeHZ-M manufactured by Tosoh Corporation). For example, it is applied to an SBR, a BR, and the like.

An "$N_2SA$ of carbon black" is measured according to JIS K 6217-2:2017.

An "$N_2SA$ of silica" is measured by a BET method according to ASTM D3037-93.

An "average primary particle size" is calculated by an arithmetic mean of particle sizes of 400 particles which are photographed with a transmission or scanning electron microscope. Regarding the particle size, in a case that the particle is in a substantially circular shape, a diameter of the circle is defined as a particle size, in a case that it is in a needle or rod shape, a minor axis is defined as a particle size, and in the other cases, an equivalent circle diameter calculated from an electron microscope image is defined as a particle size. The equivalent circle diameter is calculated as the positive square root of "$4\times$(area of particle)$/\pi$". The average primary particle size is applied to silica, carbon black, etc.

A "softening point of resin" is a temperature at which a sphere drops when the softening point specified in JIS K 6220-1:2015 7.7 is measured with a ring and ball softening point measuring device.

[Tire]

The heavy-duty tire that is one embodiment of the present invention will be described below by appropriately using the drawings. However, the drawings used are merely ones specifically showing one embodiment, and the present invention is not limited by these drawings.

The heavy-duty tire relating to the present embodiment is a heavy-duty tire comprising a tread part having a rubber layer composed of a predetermined rubber composition and comprising a tread surface, wherein $A_{IR}$, $A_{SIL}$, and $D_{CG}$ satisfy the following inequality (1) when a content, in % by mass, of an isoprene-based rubber in a rubber component is referred to as $A_{IR}$, a content, in % by mass, of silica in a filler is referred to as $A_{SIL}$, and a groove depth, in mm, of a deepest part of circumferential main grooves is referred to as DCG,

$$(1) \, A_{IR} \times A_{SIL} / D_{CG} > 340.$$

FIG. 1 is a cross-sectional view, taken along a plane including a tire rotation axis, of a tire 1 that is a heavy-duty tire relating to the present embodiment. The tire 1 comprises a tread part 3 comprising a tread surface 2, a reinforcing layer 6 arranged on its inner side in a tire radial direction, and a pair of bead parts 10 that comes into contact with a rim. The tread part 3 consists of a cap rubber layer 4 and a base rubber layer 5, and the reinforcing layer 6 comprises two belt plies 7a and 7b, one band ply 8 sandwiched between the belt plies 7a and 7b, and covering rubbers 9 arranged on the both ends of the band ply 8. The bead parts 10 comprise bead cores 11 and bead fillers 12. Two circumferential main grooves 13 extending continuously in a tire circumferential direction (FIG. 1 only shows one circumferential main groove present in the right half), and one flask-like circumferential groove 14 are formed on the tread surface 2. CL represents a tire center line. $D_{CG}$ is a depth of a deepest part of the circumferential main grooves.

Although the tread part 3 consists of two layers of the cap rubber layer and the base rubber layer in FIG. 1, the tread part may be one consisting of three or four or more rubber layers. For example, in a case where the tread part 3 consists of three rubber layers, a rubber layer located in the middle may be a sort of rubber layer belonging to cap rubber layers or a sort of rubber layer belonging to base rubber layers. For the reinforcing layer 6, the number of belt plies 7 is not limited to two and may be one or may be three or more. The number of band plies 8 is not limited to one and may be two or more. A covering rubber 9 can be appropriately added in order to cover ends of the belt plies and the band ply.

FIG. 2 is a developed view of the tread surface 2 of the tire in FIG. 1. On the tread surface 2, two circumferential main grooves 13 extending in the tire circumferential direction and one flask-like circumferential groove 14 extending in the tire circumferential direction are formed, a pair of shoulder land parts 15 is formed by the circumferential main grooves 13 and tread ends Te, and a center land part 16 is formed on an area sandwiched between the pair of shoulder land parts 15. The center land part 16 is divided into two parts by the flask-like circumferential groove 14 provided in the middle of the tread surface 2. Lug grooves 17 connecting the circumferential main grooves 13 to the tread ends Te are formed on the shoulder land parts 15, and flask-like width direction sipes 18 connecting the circumferential main grooves 13 to the flask-like circumferential groove 14 are formed on the center land parts 16. W3 indicates a maximum value of a groove width of a circumferential main groove 13 perpendicular to its extending direction.

Although the two circumferential main grooves 13 are formed in FIG. 2, the number of circumferential main grooves may be three or may be four or more. Moreover, although the circumferential main grooves 13 extend in a zigzag shape while a centerline in a width direction of each circumferential main groove is oscillating transversely, the circumferential main grooves 13 may have a linear shape, besides the zigzag shape. Here, the phrase "extends in a zigzag shape" is intended to mean that the center in the width direction of the circumferential main groove extends in the tire circumferential direction while the center is oscillating in the tire width direction. Accordingly, not only a configuration in which a linear-shaped groove bends repeatedly but also a configuration in which a curve-shaped groove curves repeatedly in a wavy shape is included. Moreover, although many lug grooves 17 are formed in FIG. 2, a form and the number of the lug grooves 17 are not particularly limited in the present embodiment.

<Inequality (1)>

A value on the right side in the inequality (1) is preferably 360, more preferably 380, further preferably 400, further preferably 450, further preferably 460, further preferably 500, further preferably 510, further preferably 520, further preferably 600. An upper limit of a value of $A_{IR} \times A_{SIL} / D_{CG}$ on the left side in the inequality (1) is not particularly limited and usually can also be assumed to be about 1000.

In the inequality (1), $A_{IR}$ and $A_{SIL}$ can be adjusted by increasing or decreasing a compounding amount of an isoprene-based rubber in the rubber component and a compounding amount of silica in the filler, and $D_{CG}$ can be adjusted by increasing or decreasing the depth of the deepest part of the circumferential main grooves. As a result, the value on the right side in the inequality (1) can be adjusted.

Preferred ranges of $A_{IR}$ and $A_{SIL}$ are as described later. Moreover, $D_{CG}$ is preferably 15.0 mm or less, more preferably 14.8 mm or less, further preferably 14.6 mm or less, further preferably 14.4 mm or less, further preferably 14.2 mm or less, further preferably 14.0 mm or less, from the viewpoint of abrasion resistance. $D_{CG}$ is preferably equal to or greater than a predetermined value from the viewpoint of drainage performance or the like but may be usually 10.0 mm or more.

<Flask-like circumferential groove>

In the heavy-duty tire of the present embodiment, it is preferable that the tread surface of the tread part comprises at least one flask-like circumferential groove extending in a tire circumferential direction and that the flask-like circumferential groove comprises a neck part having a narrow groove width, and a trunk part arranged on an inner side in a tire radial direction with respect to the neck part and having a part with a groove width larger than the maximum groove width of the neck part.

Although the flask-like circumferential groove 14 is formed on the tire center line in FIG. 2 so that the flask-like circumferential groove 14 divides the center land part 16 into two parts, in the present embodiment, it is sufficient that at least one flask-like circumferential groove is formed on at least one land part. Accordingly, it is sufficient in the present embodiment that one flask-like circumferential groove is formed on any one of the land parts, and two or more flask-like circumferential grooves may be formed on one land part. Moreover, it is sufficient that there is at least one land part on which one or more flask-like circumferential grooves are formed in such a way, and the number of such land parts may be two or may be three or more. A land part on which a flask-like circumferential groove is formed is not particularly limited and is preferably formed as a center land part. This is because it is considered that a contribution of the flask-like circumferential groove to fuel efficiency and abrasion resistance are easily brought out since a vicinity of the tire center line is a part at which a grounding pressure is highest. Moreover, the flask-like circumferential groove may have, besides the zigzag shape, a linear shape, as in the case of the circumferential main grooves.

FIG. 3 is a cross-sectional view of the flask-like circumferential groove 14 taken along the C1-C1 line shown in FIG. 2. The flask-like circumferential groove comprises a neck part 19, and a trunk part 20 arranged on an inner side in a tire radial direction with respect to the neck part and having a part with a groove width larger than the maximum groove width of the neck part. Although the groove width of the neck part is fixed at its minimum groove width 11 and is invariable in FIG. 3, the neck part may have a part with a groove width larger than W11 as long as the effects of the present invention are exhibited. Therefore, a cross-sectional shape of the neck part may have, besides a linear shape, the zigzag shape, as described in FIG. 3. Here, the wording "zigzag shape" has the same meaning as described above. Examples of one preferred aspect include an aspect in which a groove width of the neck part is invariable in its minimum groove width.

Moreover, the trunk part 20 is one having a part whose groove width is larger than the maximum groove width of the neck part. Here, the wording "having a part whose groove width is larger than the maximum groove width of the neck part" means that the trunk part is configured to have a width wider than the maximum groove width of the neck part so that the effects of the present invention can be achieved. Accordingly, the groove width of the trunk part is not particularly limited as long as the trunk part includes a part larger than the maximum groove width of the neck part so that the effects of the present invention can be achieved. For example, a part of the groove width of the trunk part may have a part narrower than the maximum groove width of the neck part, or the trunk part may be configured to consist of a part in which the groove width of the trunk part is larger than the groove width of the neck part. Since the groove width of the neck part 19 is fixed at its minimum groove width W11 in FIG. 3, the trunk part 20 is composed of only parts whose groove widths are larger than the groove width of the neck part 19.

A minimum groove width W11 of the neck part is preferably 0.5 mm or more and 2.0 mm or less. When W11 is 0.5 mm or more, for example, water becomes easy to flow from the neck part to the trunk part during wet running, so that it becomes possible to easily secure a sufficient drainage performance. On the other hand, when W11 is 2.0 mm or less, the neck part becomes easily blocked by a grounding pressure at the initial stage of abrasion when a load is applied on the tread part 3, so that rigidity of the tread part 3 in the tire axial direction can be increased. Moreover, a rubber volume of the tread part 3 is easily secured, thereby improving abrasion resistance of the tire 1. W11 is more preferably 0.7 mm or more, further preferably 0.9 mm or more, further preferably 1.1 mm or more. On the other hand, W11 is more preferably 1.8 mm or less, further preferably 1.6 mm or less, further preferably 1.4 mm or less, further preferably 1.2 mm or less.

The maximum groove width W12 of the trunk part is preferably 2.0 mm or more and 12.0 mm or less. When the maximum groove width W12 is 2.0 mm or more, the width of the flask-like circumferential groove 14 is easily secured, and an input from a road surface can be reduced. On the other hand, when the maximum groove width W12 is 12.0 mm or less, the rubber volume of the tread part 3 is easily secured, and abrasion resistance of the tire 1 is improved. W12 is more preferably 3.0 mm or more, further preferably 4.0 mm or more, further preferably 5.0 mm or more, further preferably 6.0 mm or more. On the other hand, W12 is more preferably 11.0 mm or less, further preferably 10.0 mm or less, further preferably 8.0 mm or less.

W12 is preferably 2.0 or more times and 8.0 or less times as large as W11. When W12 is 2.0 or more times as large as W11, the width of the flask-like circumferential groove 14 is easily secured, and an input from a road surface can be reduced. When W12 is 8.0 or less times as large as W11, the rubber volume of the tread part 3 is easily secured, and abrasion resistance of the tire 1 is improved. W12 is preferably 2.5 or more times, more preferably 3.0 or more times as large as W11. On the other hand, W12 is preferably 7.0 or less times, more preferably 6.0 or less times, further preferably 5.0 or less times as large as W11.

In the flask-like circumferential groove 14 of the present embodiment, more preferably, it is preferable that W11 is 0.5 mm or more, W12 is 2.0 mm or more, and W12 is 2.0 or more times as large as W11. An input from a road surface can be reduced by such a flask-like circumferential groove 14. Moreover, for the flask-like circumferential groove 14 of the present embodiment, it is preferable that W11 is 2.0 mm or less, W12 is 12.0 mm or less, and W12 is 8.0 or less times as large as W11. By such a flask-like circumferential groove 14, the rubber volume of the tread part 3 is easily secured, and abrasion resistance of the tire 1 is improved.

A depth H11 of the flask-like circumferential groove 14 and a minimum length H12 from a groove bottom of the flask-like circumferential groove 14 to the neck part in the tire radial direction preferably satisfy the following relationship,

$$1/4 \leq H12/H11 \leq 3/4.$$

When H12/H11 is 1/4 or more, a groove volume of the trunk part is easily secured, and an input from a road surface can be reduced. When H12/H11 is 3/4 or less, rigidity of the tread part 3 in the tire axial direction is increased. Moreover, the rubber volume of the tread part 3 is easily secured. As a result, abrasion resistance of the tire 1 is improved. H12/H11 is more preferably 1/3 or more. On the other hand, H12/H11 is more preferably 2/3 or less.

More preferably, the flask-like circumferential groove 14 of the present embodiment has a cross-sectional shape satisfying the condition that W12 is 2.0 to 8.0 times as large as W11 and $1/4 \leq H12/H11 \leq 3/4$. When W12 is two or more time as large as W11 and H12/H11 is 1/4 or more, an input from a road surface can be reduced. When W12 is 8.0 or less times as large as W11 and H12/H11 is 3/4 or less, the rubber volume of the tread part 3 is easily secured, and abrasion resistance of the tire 1 is improved.

<Flask-like width direction sipe>

In the heavy-duty tire of the present embodiment, it is preferable that the tread surface of the tread part comprises at least one flask-like width direction sipe extending in a tire width direction and that the flask-like width direction sipe comprises a neck part having a narrow groove width, and a trunk part arranged on an inner side in a tire radial direction with respect to the neck part and having a part with a groove width larger than the maximum groove width of the neck part.

Although many flask-like width direction sipes 18 are formed on the center land part 16 in FIG. 2 so that the sipes 18 connect the circumferential main grooves 13 to the flask-like circumferential groove in the tire width direction, in the present embodiment, it is sufficient that at least one flask-like width direction sipe is formed on at least one land part, two or more flask-like width direction sipes may be formed on one land part, or it is sufficient that there is at least one land part on which one or more flask-like width direction sipes are formed in such a manner. There may be two such land parts or three or more such land parts. Moreover, there is no need for a flask-like width direction sipe to connect adjacent circumferential grooves, and a flask-like width direction sipe may connect adjacent circumferential grooves as shown in FIG. 2, may merely open to only one of the adjacent circumferential grooves, or may open to none of the adjacent circumferential grooves.

FIG. 4 is a cross-sectional view of a flask-like width direction sipe 18 taken along the C2-C2 line shown in FIG. 2. Although the aspect of the flask-like width direction sipe formed on the tread surface 2 is different from that of the flask-like circumferential groove in manner of extending in the tire width direction in a land part, its shape in the cross-sectional view is similar to that of the above-described flask-shaped circumferential groove. Accordingly, the explanation of the above-described flask-like circumferential groove applies to the flask-like width direction sipes. However, the following explanation applies to sizes of the flask-like width direction sipes.

A minimum groove width W21 of the neck part is preferably 0.3 mm or more and 1.5 mm or less. When W21 is 0.3 mm or more, for example, water becomes easy to flow from the neck part to the trunk part during wet running, so that it becomes possible to easily secure a sufficient drainage performance. On the other hand, when W21 is 1.5 mm or less, the neck part becomes easily blocked by a grounding pressure at the initial stage of abrasion when a load is applied on the tread part 3, so that rigidity of the tread part 3 in the tire circumferential direction can be increased. Moreover, a rubber volume of the tread part 3 is easily secured, thereby improving abrasion resistance of the tire 1. W21 is more preferably 0.4 mm or more, further preferably 0.5 mm or more. On the other hand, W21 is more preferably 1.2 mm or less, further preferably 1.0 mm or less, further preferably 0.8 mm or less, further preferably 0.6 mm or less.

The maximum groove width W22 of the trunk part is preferably 1.5 mm or more and 8.0 mm or less. When the maximum groove width W22 is 1.5 mm or more, the width of the flask-like width direction sipe 18 is easily secured, and an input from a road surface can be reduced. On the other hand, when the maximum groove width W22 is 8.0 mm or less, the rubber volume of the tread part 3 is easily secured, and abrasion resistance of the tire 1 is improved. W22 is more preferably 2.0 mm or more, further preferably 2.5 mm or more, further preferably 3.0 mm or more. On the other hand, W22 is more preferably 7.0 mm or less, further preferably 6.0 mm or less, further preferably 5.0 mm or less, further preferably 4.0 mm or less.

W22 is preferably 4.0 or more times and 13.0 or less times as large as W21. When W22 is 4.0 or more times as large as W21, the width of the flask-like wide direction sipe 18 is easily secured, and an input from a road surface can be reduced. When W22 is 13.0 or less times as large as W21, the rubber volume of the tread part 3 is easily secured, and abrasion resistance of the tire 1 is improved. W22 is more preferably 5.0 or more times, further preferably 6.0 or more times as large as W21. On the other hand, W22 is preferably 11.0 or less times, more preferably 9.0 or less times, further preferably 7.0 or less times as large as W21.

In the flask-like width direction sipe 18 of the present embodiment, more preferably, it is preferable that W21 is 0.3 mm or more, W22 is 1.5 mm or more, and W22 is 4.0 or more times as large as W21. An input from a road surface can be reduced by such a flask-like width direction sipe 18. Moreover, for the flask-like width direction sipe 18 of the present embodiment, it is preferable that W21 is 1.5 mm or less, W22 is 8.0 mm or less, and W22 is 13.0 or less times as large as W21. By such a flask-like width direction sipe 18, the rubber volume of the tread part 3 is easily secured, and abrasion resistance of the tire 1 is improved.

A depth H21 of the flask-like width direction sipe 18 and a minimum length H22 from a groove bottom of the flask-like width direction sipe 18 to the neck part in the tire radial direction preferably satisfy the following relationship,

$$1/5 \leq H22/H21 \leq 3/5.$$

When H22/H21 is 1/5 or more, a groove volume of the trunk part is easily secured, and an input from a road surface can be reduced. When H22/H21 is 3/5 or less, rigidity of the tread part 3 in the tire axial direction is increased. Moreover, the rubber volume of the tread part 3 is easily secured. As a result, abrasion resistance of the tire 1 is improved. H22/H21 is more preferably 1/4 or more, further preferably 1/3 or more. On the other hand, H22/H21 is more preferably 1/2 or less, further preferably 2/5 or less.

More preferably, the flask-like width direction sipe 18 of the present embodiment has a cross-sectional shape satisfying the condition that W22 is 4.0 to 13.0 times as large as W21 and $1/5 \leq H22/H21 \leq 3/5$. When W22 is 4.0 or more time as large as W21 and H22/H21 is 1/5 or more, an input from a road surface can be reduced. When W22 is 13.0 or less times as large as W21 and H22/H21 is 3/5 or less, the rubber volume of the tread part 3 is easily secured, and abrasion resistance of the tire 1 is improved.

$$(W12/W11 \times A_{SIL})$$

In the heavy-duty tire of the present embodiment, the product $(W12/W11 \times A_{SIL})$ of W12/W11 and a content $A_{SIL}$ of silica in a filler is preferably greater than 140. This is because such a condition contributes to an improvement in overall performance of fuel efficiency and abrasion resistance. A value of the product is more preferably greater than 160, further preferably greater than 180. An upper limit of W12/W11 $\times A_{SIL}$ is not particularly limited, and usually it is preferably a value less than 800.

<Reinforcing layer>

It is preferable that the heavy-duty tire of the present embodiment comprises a reinforcing layer on an inner side of the tread part in the tire radial direction and that the reinforcing layer comprises a band ply comprising a helically-wound band cord. It is preferable that the band ply is of a form in which its both ends are arranged to be opposite to each other with respect to an equatorial plane sandwiched between these ends, that is, a form so-called a "full band".

Moreover, it is preferable that the reinforcing layer further comprises a plurality of belt plies comprising many belt cords arranged in parallel and that at least one layer of the belt plies is arranged on an inner side of the band ply in the tire radial direction. In a radial tire, a carcass comprising carcass cords forming a tire skeleton is arranged such that the carcass cords are at an angle of approximately 90° with respect to the tire equatorial plane (that is, the inclination angle is approximately 90°), whereas an inclination angle of the band ply is approximately 0°. Therefore, when the band ply is placed directly on the carcass, strain is generated due to a difference between the angles of the carcass cords and the band cords. On the other hand, the inclination angles of the belt cords constituting the belt ply are greater than 0° and less than 90°. Therefore, as described above, when at least one layer of belt plies is arranged on the inner side of the band ply in the tire radial direction, an influence of strain generated by the difference in angle of cord between the plies can be reduced, so that it is considered that such an arrangement works favorably not only for durability but also for fuel efficiency.

Specific examples of the configuration of the reinforcing layer include an example in which an inner-side belt ply, a band ply, and an outer-side belt ply are arranged in order from the inner side toward the outer side in the tire radial direction. Here, it is preferable that the band ply is of a form of the above-described full band. Moreover, the inner-side belt ply may be not only one consisting of one layer of a belt ply but also one consisting of two layers of belt plies different in inclination angle or one consisting of three or more layers of belt plies. The outer-side belt ply may be not only one consisting of one layer of a belt ply but also one consisting of two layers of belt plies different in inclination angle or one consisting of three or more layers of belt plies. Furthermore, a pair of band plies that reinforce a part on the outer side in the tire width direction and that are of a form so-called an edge band may be arranged on a further outer side of the outer-side belt ply in the tire radial direction.

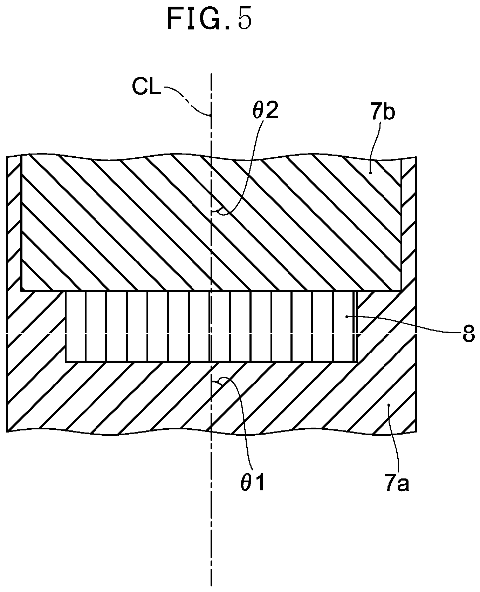

FIG. 5 shows one example of the configuration of the reinforcing layer 6. In FIG. 5, a horizontal direction is an axial direction of the tire 1, and a vertical direction is a circumferential direction of the tire 1. A direction perpendicular to a paper surface is a radial direction of the tire 1. The front side of the paper surface is an outer side in the radial direction, and the back side of the paper surface is an inner side in the radial direction.

In FIG. 5, the reinforcing layer 6 is composed of a belt 7 composed of two belt plies 7a and 7b, and a band ply 8. The two belt polies 7a and 7b are arranged in this order from the inner side toward the outer side in the radial direction. Each belt ply is arranged so that its both ends are opposite to each other with respect to an equatorial plane sandwiched between these ends. Although such a configuration is one of preferred aspects, the tire of the present embodiment is not limited to such a configuration, and for example, the total number of belt plies may be one or may be three or more. In FIG. 5, the belt ply 7a has a wide axial width and the belt ply 7b has a narrow axial width. Although such a configuration is one of preferred aspects, the tire of the present embodiment is not limited to such a configuration.

In FIG. 5, the band ply 8 is arranged between the belt plies 7a and 7b. Moreover, the band ply 8 is of a form in which its both ends are arranged to be opposite to each other with respect to an equatorial plane sandwiched between these ends, that is, a form so-called a "full band". Examples of the band ply further include one in a form that reinforces a part on the outer side in the tire width direction, that is, a form so-called an edge band, and the edge band can also be added as appropriate.

Each belt ply comprises many belt cords arranged in parallel. Although the belt cords are represented by the solid lines in FIG. 5 for convenience of explanation, the belt cords are coated with belt-coating rubbers. In the tire of the present embodiment, the belt cords are preferably steel cords. In each belt ply, the belt cords incline relative to the circumferential direction. In FIG. 5, an angle $\theta1$ is an inclination angle formed by belt cords included in the belt ply 7a with respect to the tire equatorial plane (hereinafter, a first inclination angle $\theta1$). An angle $\theta2$ is an inclination angle formed by belt cords included in the belt ply 7b with respect to the equatorial plane (hereinafter, a second inclination angle $\theta2$). The first inclination angle $\theta1$ and the second inclination angle $\theta2$ are preferably 10° or more and preferably 60° or less. The first inclination angle $\theta1$ is preferably 10° or more and preferably 30° or less from the viewpoints that movement of the tire is constrained effectively and a stable ground-contacting shape is secured. The second inclination angle $\theta2$ is preferably 10° or more and preferably 30° or less.

In FIG. 5, the band ply 8 comprises a helically-wound band cord. Although the band cord is represented by the solid line in FIG. 5 for convenience of explanation, the band cord is coated with a band-coating rubber. In the tire of the present embodiment, the band cord may be either one of a steel cord or an organic fiber cord, and a steel cord is preferable. A nylon fiber, a polyester fiber, a rayon fiber, and an aramid fiber are shown as examples of the organic fiber. In the band ply 8, an angle formed by the band cord with respect to the circumferential direction is preferably 5° or less, more preferably 2° or less. The band cord of the band ply 8 extends substantially in the circumferential direction.

In FIG. 5, the belt ply 7a is arranged on an inner side of the band ply 8 in the radial direction. Since this belt ply 7a has a width wider than that of the band ply 8 in the tire width direction, it contributes to suppression of tension fluctuation of the band cord. Therefore, since the band ply 8 can effectively suppress of the tire to reduce grounding pressure, an effect of working favorably for fuel efficiency and abrasion resistance can be obtained. From this viewpoint, at least one belt ply of the plurality of the belt plies constituting the belt is preferably located on the inner side in the radial direction with respect to the band ply 8. Moreover, the at least one belt ply located on the inner side of the band ply 8 preferably has a width wider than that of the band ply 8.

[Rubber composition]

A rubber composition constituting a rubber layer comprising the tread surface of the heavy-duty tire relating to the present embodiment will be described below. The rubber composition comprises a rubber component comprising an isoprene-based rubber, and a filler comprising silica.

<Rubber component>

The rubber component can comprise another rubber component in addition to an isoprene-based rubber. As such a rubber component, a crosslinkable rubber component commonly used in the tire industry can be used, and more specifically, examples of such a rubber component include a diene-based rubber, such as a styrene-butadiene rubber (SBR), a butadiene rubber (BR), a styrene-isoprene-butadiene copolymer rubber (SIBR), a styrene-isobutylene-styrene block copolymer (SIBS), a chloroprene rubber (CR), an acrylonitrile-butadiene rubber (NBR), and the like; and a non-diene-based rubber, such as a hydrogenated nitrile rubber (HNBR), a butyl rubber (IIR), an ethylene propylene rubber, a polynorbornene rubber, a silicone rubber, a polyethylene chloride rubber, a fluororubber (FKM), an acrylic rubber (ACM), a hydrin rubber, and the like. These rubber components may be used alone, or two or more thereof may be used in combination.

The rubber component preferably comprises at least one of an SBR and a BR in addition to an isoprene-based rubber or may comprise an SBR and a BR. Moreover, the rubber component may consist of an isoprene-based rubber, an SBR, and a BR or may consist of an isoprene-based rubber.

(Isoprene-based rubber)

As an isoprene-based rubber, for example, those common in the tire industry can be used, such as an isoprene rubber (IR), a natural rubber, and the like. Examples of the natural rubber include not only a non-modified natural rubber (NR) but also a modified natural rubber such as an epoxidized natural rubber (ENR), a hydrogenated natural rubber (HNR), a deproteinized natural rubber (DPNR), an ultra pure natural rubber (UPNR), a grafted natural rubber, and the like. These isoprene-based rubbers may be used alone, or two or more thereof may be used in combination.

The NR is not particularly limited, and those common in the tire industry can be used, examples of which include, for example, SIR20, RSS#3, TSR20, and the like.

$<<A_{IR}>>$

A content of an isoprene-based rubber in the rubber component is greater than 85% by mass. The content is preferably greater than 90% by mass, more preferably greater than 92% by mass, further preferably greater than 95% by mass, or may be 100% by mass.

(SBR)

The SBR is not particularly limited, and any of a solution-polymerized SBR (S-SBR) and an emulsion-polymerized SBR (E-SBR) can be appropriately used. However, an S-SBR is preferable from the viewpoint of the effects of the present invention. Moreover, as the SBR, modified SBRs (a modified S-SBR, a modified E-SBR) thereof can be used. Examples of the modified SBR include a SBR modified at its terminal and/or main chain, a modified SBR coupled with tin, a silicon compound, etc. (a modified SBR of condensate or having a branched structure, etc.), and the like. The SBRs may be used alone, or two or more thereof may be used in combination.

An oil-extended SBR or a non-oil extended SBR can be used as an SBR. Those commercially available from JSR Corporation, Sumitomo Chemical Co., Ltd., UBE Corporation, Asahi Kasei Corporation, ZS Elastomer Co., Ltd., ARLANXEO, etc. can be used as the SBR.

A styrene content of an SBR is preferably greater than 10% by mass, more preferably greater than 15% by mass, further preferably greater than 20% by mass, from the viewpoints of wet grip performance and abrasion resistance. Moreover, the styrene content of the SBR is preferably less than 40% by mass, more preferably less than 35% by mass, further preferably less than 30% by mass, from the viewpoints of temperature dependency of grip performance and abrasion resistance. The styrene content of the SBR is measured by the above-described measuring method.

A vinyl content of an SBR is preferably greater than 10 mol%, more preferably greater than 15 mol%, further preferably greater than 20 mol%, from the viewpoints of wet grip performance and abrasion resistance. Moreover, the vinyl content of the SBR is preferably less than 40 mol%, more preferably less than 35 mol%, further preferably less than 30 mol%, from the viewpoints of wet grip performance and abrasion resistance. The vinyl content of the SBR (1,2-bond butadiene unit amount) is measured by the above-described measuring method.

A glass transition temperature (Tg) of an SBR is preferably higher than -80°C, more preferably higher than -70°C, further preferably higher than -65°C, from the viewpoint of wet grip performance. Moreover, the Tg of the SBR is preferably lower than -30°C, more preferably lower than -35°C, further preferably lower than -40°C, from the viewpoint of fuel efficiency. The Tg of the SBR is measured by the above-described measuring method.

A weight-average molecular weight (Mw) of an SBR is preferably 100000 or more, more preferably 150000 or more, further preferably 190000 or more, from the viewpoint of abrasion resistance. Moreover, the Mw is preferably 2500000 or less, more preferably 2000000 or less, further preferably 1000000 or less, from the viewpoints of cross-linking uniformity, etc. The Mw of the SBR is measured by the above-described measuring method.

A content of an SBR when compounded in the rubber component is preferably greater than 1% by mass, more preferably greater than 3% by mass, further preferably greater than 5% by mass, from the viewpoints of abrasion resistance and wet grip performance. Moreover, the content is preferably less than 10% by mass, more preferably less than 8% by mass, further preferably less than 7% by mass, from the viewpoint of abrasion resistance.

(BR)

The BR is not particularly limited, and those common in the tire industry can be used, such as, for example, a BR having a cis content of less than 50 mol% (a low cis BR), a BR having a cis content of 90 mol% or more (a high cis BR), a rare-earth-based butadiene rubber synthesized using a rare-earth element-based catalyst (a rare-earth-based BR), a BR containing a syndiotactic polybutadiene crystal (an SPB-containing BR), a modified BR (a high cis modified BR, a low cis modified BR), and the like. The BRs may be used alone, or two or more thereof may be used in combination.

As the high cis BR, for example, those commercially available form Zeon Corporation, UBE Corporation, JSR Corporation, etc. can be used. When the rubber composition comprises a high cis BR, a low temperature property and abrasion resistance can be improved. A cis content of the high cis BR is preferably greater than 90 mol%, more preferably greater than 95 mol%, further preferably 96 mol% or more. A cis content of a BR is measured by the above-described measuring method.

The rare-earth-based BR includes those which are synthesized using a rare-earth element-based catalyst and have a vinyl content of preferably less than 1.8 mol%, more preferably less than 1.5 mol%, further preferably less than 1.2 mol%, and a cis content of preferably greater than 90 mol%, more preferably greater than 95 mol%, further preferably 96 mol% or more. As the rare-earth-based BR, for example, those commercially available from LANXESS, etc. can be used.

Examples of the SPB-containing BR include those in which 1,2-syndiotactic polybutadiene crystal is chemically bonded with BR and dispersed, but not those in which the crystal is simply dispersed in the BR. As such a SPB-containing BR, those commercially available from UBE Corporation, etc. can be used.

Examples of the modified BR include BRs modified with the same functional groups as described above for the SBR, and the like, and a modified butadiene rubber (modified BR) modified at its terminal and/or main chain with a functional group comprising at least one element selected from the group consisting of silicon, nitrogen, and oxygen can also be appropriately used.

Examples of other modified BRs include those obtained by adding a tin compound after polymerizing 1,3-butadiene by a lithium initiator, the terminal of the modified BR molecule being further bonded by tin-carbon bond (tin-modified BRs), and the like. Moreover, the modified BR may be either non-hydrogenated or hydrogenated.

A weight-average molecular weight (Mw) of a BR is preferably greater than 300000, more preferably greater than 350000, further preferably greater than 400000, from the viewpoint of abrasion resistance. Moreover, it is preferably less than 2000000, more preferably less than 1000000, further preferably less than 700000, from the viewpoints of cross-linking uniformity, etc. The Mw of the BR can be calculated by the above-described method.

A content of a BR in the rubber component is, but not particularly limited to, preferably greater than 1% by mass, more preferably greater than 3% by mass, further preferably greater than 5% by mass. Moreover, the content of the BR in the rubber component is preferably less than 15% by mass, more preferably less than 12% by mass, further preferably less than 9% by mass.

(Rubber component synthesized from recycle-derived/biomass-derived raw material)

A monomer that is a structural unit of a synthetic rubber such as an IR, an SBR, a BR, and the like may be one derived from underground resources such as petroleum, a natural gas, and the like or one recycled from a rubber product such as a tire and the like or a non-rubber product such as polystyrene and the like. Examples of monomers obtained by recycle (recycled monomers) include, but not particularly limited to, a recycle-derived polyisoprene, a recycle-derived butadiene, a recycle-derived aromatic vinyl compound, and the like. Examples of the above-described butadiene include 1,2-butadiene and 1-3 butadiene. Examples of the aromatic vinyl compound include, but not particularly limited to, styrene and the like. Among them, a recycle-derived polyisoprene (recycled isoprene), a recycle-derived butadiene (recycled butadiene), and/or a recycle-derived styrene (recycled styrene) are preferably used as raw materials.

A method of producing a recycled monomer is not particularly limited, examples of which include, for example, synthesis of a recycled monomer from recycle-derived naphtha obtained by decomposing a rubber product such as a tire and the like. Moreover, a method of producing a recycle-derived naphtha is not particularly limited and may be performed, for example, by extracting naphtha after decomposing a rubber product such as a tire and the like under high temperature and pressure, or decomposing it by microwaves, or mechanically pulverizing it.

Furthermore, a monomer that is a structural unit of a polymer such as an IR, an SBR, a BR, and the like may be one derived from biomass. In the present specification, "biomass" refers to a material derived from natural resources such as plants and the like. Examples of biomass include, but not particularly limited to, for example, agricultural, forest and fishery products and sugar, wood waste, a plant residue after acquisition of a useful component, a plant-derived ethanol, a biomass naphtha, and the like.

Examples of the biomass-derived monomer (biomass monomer) include, but not particularly limited to, a biomass-derived butadiene, a biomass-derived aromatic vinyl compound, and the like. Examples of the above-described butadiene include 1, 2-butadiene and 1,3-butadiene. Examples of the above-described aromatic vinyl compound include, but not particularly limited to, styrene and the like. Moreover, a method of producing a biomass monomer is not particularly limited, examples of which include, for example, a method by biological and/or chemical and/or physical conversion of an animal or a plant, and the like. A microbial fermentation is representative of biological conversion, and examples of chemical and/or physical conversion include a method using a catalyst, a method using a high heat, a method using a high pressure, a method using an electromagnetic wave, a method using a critical liquid, combinations thereof, and the like.

Examples of a polymer synthesized from a biomass monomer component (biomass polymer) include, but not particularly limited to, a polybutadiene rubber synthesized from a biomass-derived butadiene, an aromatic vinyl/butadiene copolymer synthesized from a biomass-derived butadiene and/or a biomass-derived aromatic vinyl compound, and the like. Examples of the aromatic vinyl/butadiene copolymer include, for example, a styrene-butadiene rubber synthesized from a biomass-derived butadiene and/or a biomass-derived styrene, and the like.

Whether or not a raw material of a polymer is derived from biomass can be determined from percent Modern Carbon (pMC) measured according to ASTM D6866-10. "pMC" means a ratio of $^{14}C$ concentration of a sample to $^{14}C$ concentration of a modern standard carbon (modern standard reference) and is a value used as an index that indicates a biomass ratio of a compound. A significance of this value will be mentioned below.

In 1 mole of carbon atoms ($6.02\times10^{23}$), there are about $6.02\times10^{11}$ $^{14}C$ that are about one trillionth of the number of normal carbon atoms. A half-life of $^{14}C$ is 5730 years, and $^{14}C$ regularly decreases. Therefore, in fossil fuels such as coal, petroleum, natural gas, and the like, where it is considered that 226,000 years or more have passed since carbon dioxide or the like in the atmosphere was absorbed by plants or the like to be fixed, all of $^{14}C$ elements, which were contained in them at the beginning of fixation, have decayed. Therefore, in the present 21st century, fossil fuels such as coal, petroleum, natural gas, and the like do not contain any $^{14}C$ element. Accordingly, chemical substances produced using these fossil fuels as raw materials do not contain any $^{14}C$ element as well.

On the other hand, $^{14}C$ is constantly generated by cosmic rays causing nuclear reactions in the atmosphere. Therefore, decrease in $^{14}C$ due to radioactive decay and generation of $^{14}C$ due to nuclear reactions are balanced, and the amount of $^{14}C$ has been constant in the atmosphere environment of the earth. Therefore, the $^{14}C$ concentration of substances derived from biomass resources that have been circulating in the current environment becomes a value of about $1\times10^{-12}$ mol% based on the entire carbon atoms, as described above. Accordingly, by utilizing a difference between these values, a biomass ratio in a certain compound can be calculated.

This $^{14}C$ is generally measured as follows. A $^{13}C$ concentration ($^{13}C/^{12}C$) and a $^{14}C$ concentration ($^{14}C/^{12}C$) are measured using an accelerator mass spectrometry based on a tandem accelerator. In the measurements, a $^{14}C$ concentration in a circulating carbon in nature as of 1950 is adopted as the modern standard reference that becomes a reference for the $^{14}C$ concentration. As a specific reference material, an oxalic acid standard provided by NIST (National Institute of Standard and Technology) is used. A specific radioactivity of carbon in this oxalic acid (radioactivity intensity of $^{14}C$ per gram of carbon) is sorted for each carbon isotope, $^{13}C$ is corrected to be a constant value, and a value corrected for attenuation correction from 1950 to the date of measurement is used as a standard $^{14}C$ concentration value (100%). A ratio of this value and a value actually measured for a sample becomes a pMC value.

Thus, if a rubber is produced from a material derived from 100% biomass, the $^{14}C$ concentration shows a value of approximately 110 pMC as, currently, under a normal condition, it is often not equal to 100, though there are regional differences and the like. On the other hand, if this $^{14}C$ concentration is measured for a chemical substance derived from a fossil fuel such as petroleum and the like, it shows a value of approximately 0 pMC (for example, 0.3 pMC). This value corresponds to a biomass ratio of 0% as mentioned above.

From above, it is appropriate in terms of environmental protection to use a material such as a rubber having a high pMC value, that is, a material such as a rubber having a high biomass ratio, for a rubber composition.

<Filler>

The filler comprises silica. The filler preferably further comprises carbon black. Although the filler can comprise a filler other than silica and carbon black, a filler consisting of carbon black and silica may be used.

Another filler other than silica and carbon black is not particularly limited, and for example, those conventionally and commonly used in the tire industry, such as aluminum hydroxide, calcium carbonate, alumina, clay, talc, and the like, can be compounded.

The filler may be used alone, or two or more thereof may be used in combination.

(Silica)

Silica is not particularly limited, and those common in the tire industry can be used, such as, for example, silica prepared by a dry process (anhydrous silica), silica prepared by a wet process (hydrous silica), and the like. A raw material of silica is not particularly limited and may be, for example, a raw material derived from a mineral such as quartz or a raw material derived from a biological substance such as rice husks (for example, silica made from a biomass material such as rice husks, and the like), or silica recycled from a product containing silica may be used. Among them, hydrous silica prepared by a wet process is preferable for the reason that it has many silanol groups. The silica may be used alone, or two or more thereof may be used in combination.

Silica made from a biomass material can be obtained by, for example, burning rice husks to obtain rice husk ashes, extracting silicate from the rice husk ashes using a sodium hydroxide solution, generating silicon dioxide by reacting the silicate with sulfuric acid in the same manner as a conventional wet silica, and filtering, washing with water, drying and pulverizing precipitates of the silicon dioxide.

As silica recycled from a product comprising silica, silica recovered from such a product as an electronic component like a semiconductor, a tire, a desiccant, a filtering material like diatomaceous earth, or the like can be used. Moreover, a recovering method is not particularly limited, examples of which include pyrolysis, decomposition by electromagnetic waves, and the like. Among them, silica recovered from an electronic component such as a semiconductor and the like or from a tire is preferable.

As a crystallized silica is insoluble in water, silicic acid that is a component thereof cannot be used. By controlling a burning temperature and a burning time, crystallization of silica in rice husk ashes can be suppressed (see JP 2009-2594 A, Akita Prefectural University Web Journal B/2019, vol.6, p.216-222, etc.).

As an amorphous silica extracted from rice husks, those commercially available from Wilmar, etc. can be used.

A nitrogen adsorption specific surface area ($N_2SA$) of silica is preferably greater than 130 $m^2/g$, more preferably greater than 150 $m^2/g$, further preferably greater than 170 $m^2/g$, further preferably 175 $m^2/g$ or more, further preferably greater than 185 $m^2/g$, further preferably greater than 195 $m^2/g$, from the viewpoints of abrasion resistance and fracture characteristics. Moreover, the $N_2SA$ is preferably less than 500 $m^2/g$, more preferably less than 350 $m^2/g$, further preferably less than 300 $m^2/g$, further preferably less than 250 $m^2/g$, from the viewpoint of processability. The $N_2SA$ of the silica is a value measured by the above-described measuring method.

An average primary particle size of silica is preferably less than 18 nm, more preferably less than 17 nm, further preferably less than 16 nm, from the viewpoint of the effects of the present invention. Moreover, the average primary particle size is preferably greater than 12 nm, more preferably greater than 13 nm, further preferably greater than 14 nm, from the viewpoint of processability. The average primary particle size of silica is measured by the above-described measuring method.

A content of silica is preferably greater than 25 parts by mass, more preferably greater than 30 parts by mass, further preferably 35 parts by mass or more, based on 100 parts by mass of the rubber component, from the viewpoint of balance between fuel efficiency and wet grip performance. Moreover, the content is preferably less than 150 parts by mass, more preferably less than 100 parts by mass, further preferably less than 80 parts by mass, further preferably less than 60 parts by mass, from the viewpoint of processability.

<<$A_{SIL}$>>

A content of silica in a filler is greater than 60% by mass. The content is preferably greater than 63% by mass, more preferably greater than 70% by mass, further preferably greater than 80% by mass, further preferably greater than 90% by mass, from the viewpoint of the effects of the present invention. On the other hand, the content is usually less than 95% by mass but may be 100% by mass.

(Silane coupling agent)

The silica is preferably used in combination with a silane coupling agent. The silane coupling agent is not particularly limited, and examples of the silane coupling agent include, for example, a sulfide-based silane coupling agent such as bis(3-triethoxysilylpropyl)disulfide, bis(3-triethoxysilylpropyl)tetrasulfide, and the like; a mercapto-based silane coupling agent such as 3-mercaptopropyltrimethoxysilane, 3-mercaptopropyltriethoxysilane, 2-mercaptoethyltrimethoxysilane, 2-mercaptoethyltriethoxysilane, and the like; a vinyl-based silane coupling agent such as vinyltriethoxysilane, vinyltrimethoxysilane, and the like; an amino-based silane coupling agent such as 3-aminopropyltriethoxysilane, 3-aminopropyltrimethoxysilane, 3-(2-aminoethyl)aminopropyltriethoxysilane, and the like; a glycidoxy-based silane coupling agent such as γ-glycidoxypropyltriethoxysilane, γ-glycidoxypropyltrimethoxysilane, and the like; a nitro-based silane coupling agent such as 3-nitropropyltrimethoxysilane, 3-nitropropyltriethoxysilane, and the like; a chloro-based silane coupling agent such as 3-chloropropyltrimethoxysilane, 3-chloropropyltriethoxysilane, and the like; and the like. Among them, a sulfide-based silane coupling agent and/or a mercapto-based silane coupling agent are preferably compounded in the rubber composition. As the silane coupling agent, for example, those commercially available from Evonik Industries AG, Momentive Performance Materials, etc. can be used. The silane coupling agents may be used alone, or two or more thereof may be used in combination.

A content of a silane coupling agent based on 100 parts by mass of silica is preferably 1 part by mass or more, more preferably 3 parts by mass or more, further preferably 5 parts by mass or more, further preferably 8 parts by mass or more, from the viewpoint of enhancing dispersibility of silica. Moreover, it is preferably 20 parts by mass or less, more preferably 18 parts by mass or less, further preferably 16 parts by mass or less, from the viewpoints of cost and processability.

(Carbon black)

Examples of carbon black include, but not particularly limited to, N134, N110, N220, N234, N219, N339, N330, N326, N351, N550, N762, and the like. A raw material of carbon black may be a biomass material such as lignin, vegetable oil, and the like or may be pyrolysis oil obtained by pyrolyzing a waste tire. Moreover, a method of producing carbon black may be a method using combustion such as a furnace method, may be a method using hydrothermal carbonization (HTC), or may be a method using pyrolysis of methane by a thermal black method and the like. As a commercially available product, products from ASAHI CARBON CO., LTD., Cabot Japan K.K., TOKAI CARBON CO., LTD., Mitsubishi Chemical Corporation., Lion Corporation., NIPPON STEEL Chemical & Material Co., Ltd., Columbia Carbon Corporation., etc. can be used. These may be used alone, or two or more thereof may be used in combination.

Moreover, as carbon black other than the above-described carbon black, a recovered carbon black obtained by pyrolyzing a product comprising carbon black such as a tire and the like followed by refining may be used from the viewpoints of a life cycle assessment, etc.

The term "recovered carbon black" refers to carbon black obtained by pulverizing a product such as a used tire comprising carbon black and the like and baking the pulverized product, in which, after the product is subjected to oxidative combustion by heating in the air, a ratio of a mass of ash (ash content), which is a component that does not combust, is 13% by mass or more according to a thermal weight measurement method of JIS K 6226-2:2003. That is, a ratio of a mass (carbon amount) of a weight lost content due to the oxidative combustion of the recovered carbon black is 87% by mass or less. The recovered carbon black may be expressed by rCB.

A recovered carbon black can be obtained from a pyrolysis process of a used pneumatic tire. For example, EP 3427975 A refers to "Rubber Chemistry and Technology", vol. 85, No. 3, pp.408-449 (2012), particularly, pages 438, 440, and 442 and describes that a recovered carbon black can be obtained by pyrolysis of an organic material at 550 to 800°C under an environment in which oxygen is eliminated or by vacuum pyrolysis at a relatively low temperature ([0027]). As described in [0004] of JP 6856781 B, such carbon black obtained by the pyrolysis process usually lacks a functional group on its surface (A Comparison of Surface Morphology and Chemistry of Pyrolytic Carbon Blacks with Commercial Carbon Blacks, Powder Technology 160 (2005) 190-193).

The recovered carbon black may be one that lacks a functional group on its surface or may be one treated so as to include a functional group on its surface. The treatment of the recovered carbon black so that the recovered carbon black includes a functional group on its surface can be performed by a usual method. For example, in EP 3173251 A, carbon black obtained from a pyrolysis process is treated with potassium permanganate under an acidic condition, thereby obtaining carbon black including a hydroxyl group and/or a carboxyl group on its surface. Moreover, in JP 6856781 B, carbon black obtained from a pyrolysis process is treated with an amino acid compound including at least one thiol group or disulfide group, thereby obtaining carbon black whose surface is activated. Examples of the recovered carbon black relating to the present embodiment also include carbon black treated so as to include a functional group on its surface.

As the recovered carbon black, those commercially available from Strebl Green Carbon Pte Ltd., LD Carbon, etc. can be used.

A nitrogen adsorption specific surface area ($N_2SA$) of carbon black is preferably greater than 50 $m^2/g$, more preferably greater than 80 $m^2/g$, further preferably greater than 100 $m^2/g$, from the viewpoints of weather resistance and reinforcing property. Moreover, the $N_2SA$ is preferably less than 250 $m^2/g$, more preferably less than 220 $m^2/g$, further preferably less than 180 $m^2/g$, further preferably less than 150 $m^2/g$, from the viewpoints of dispersibility, fuel efficiency, fracture characteristics, and durability. The $N_2SA$ of the carbon black is measured by the above-described measuring method.

An average primary particle size of carbon black is preferably greater than 12 nm, more preferably greater than 15 nm, further preferably greater than 17 nm, from the viewpoints of weather resistance and reinforcing property. Moreover, the average primary particle size is preferably less than 25 nm, more preferably less than 22 nm, further preferably less than 20 nm, from the viewpoints of dispersibility, fuel efficiency, fracture characteristics, and durability. The average primary particle size of the carbon black is measured by the above-described measuring method.

A total content of carbon black based on 100 parts by mass of the rubber component is preferably greater than 1 part by mass, more preferably greater than 3 parts by mass, further preferably 5 parts by mass or more, from the viewpoints of weather resistance and reinforcing property. Moreover, it is preferably less than 40 parts by mass, more preferably less than 30 parts by mass, further preferably 20 parts by mass or less, from the viewpoint of fuel efficiency.

A total content of silica and carbon black based on 100 parts by mass of the rubber component is preferably greater than 40 parts by mass, more preferably greater than 50 parts by mass, further preferably 55 parts by mass or more, from the viewpoint of abrasion resistance. Moreover, it is preferably less than 180 parts by mass, more preferably less than 130 parts by mass, further preferably less than 110 parts by mass, from the viewpoint of suppressing deterioration of fuel efficiency and abrasion resistance.

<Other compounding agents>

The rubber composition can appropriately comprise compounding agents conventionally and commonly used in the tire industry, for example, a softening agent, a vulcanized rubber particle (rubber powder), an antioxidant, wax, processing aid, stearic acid, zinc oxide, a vulcanizing agent, a vulcanization accelerator, and the like, in addition to the above-described components.

Examples of the softening agent include resin, oil, a liquid rubber, an ester-based plasticizing agent, and the like. These softening agents may be ones derived from mineral resources such as petroleum, natural gas, and the like, ones derived from biomass, or ones derived from naphtha recycled from a rubber product or non-rubber product. Moreover, low-molecular-weight hydrocarbon components obtained by pyrolyzing used tires or products containing various components and performing extraction from the pyrolysate may be used as softening agents. The softening agent may be used alone, or two or more thereof may be used in combination.

(Resin)

The rubber composition preferably comprises resin among the above-described other compounding agents. The resin is not particularly limited, and examples of the resin include adhesive resins such as a dicyclopentadiene-based resin, an aromatic vinyl-based resin, a C9-based resin, a C5-based resin, a C5/C9-based resin, a coumarone-based resin, an indene-based resin, a terpene-based resin, a rosin-based resin, a phenol-based resin, and the like, which are commonly used in the tire industry. The resin may be used alone, or two or more thereof may be used in combination.

<<Dicyclopentadiene-based resin>>

A "dicyclopentadiene-based resin" means a resin comprising, as a monomer component, cyclopentadiene (CPD) or dicyclopentadiene (DCPD) and may be those undergoing hydrogenation or modification. Examples of the dicyclopentadiene-based resin include, for example, a DCPD/C9 resin comprising, as a monomer component, dicyclopentadiene and a C9 fraction described later (the DCPD/C9 resin may be those undergoing hydrogenation or modification), and the like. A DCPD/C9 resin comprising, as a monomer component, dicyclopentadiene and styrene is preferable, and a DCPD/C9 resin comprising, as a monomer component, dicyclopentadiene, styrene, and indene is particularly preferable. As a dicyclopentadiene-based resin, for example, those commercially available from Exxon Mobil Chemical Corporation, ENEOS Corporation, Zeon Corporation, Maruzen Petrochemical Co., Ltd., etc., can be used. These dicyclopentadiene-based resins may be used alone, or two or more thereof may be used in combination.

<<Aromatic vinyl-based resin>>

An "aromatic vinyl-based resin" means a resin comprising, as a monomer component whose content is the highest in the resin, an aromatic vinyl compound such as styrene, $\alpha$-methylstyrene, vinyltoluene, p-chlorostyrene, and the like and may be those undergoing hydrogenation or modification. As the aromatic vinyl-based resin, a homopolymer of $\alpha$-methylstyrene or styrene or a copolymer of $\alpha$-methylstyrene and styrene is preferable, because it is economical, easy to process, and excellent in heat generation. The copolymer of $\alpha$-methylstyrene and styrene is more preferable. As the aromatic vinyl-based resin, for example, those commercially available from Kraton Corporation, Eastman Chemical Company, Mitsui Chemicals, Inc., etc. can be used. These aromatic vinyl-based resins may be used alone, or two or more thereof may be used in combination.

<<C9-based resin>>

A "C9-based resin" means a resin obtained by polymerizing C9 fractions and may be one obtained by homopolymerizing C9 fractions or a copolymer obtained by copolymerizing C9 fractions and another component. For example, a resin obtained by copolymerizing dicyclopentadiene (DCPD) and C9 fractions is referred to as a "DCPD/C9 resin". Moreover, the C9-based resin may be those undergoing hydrogenation or modification. Examples of C9 fractions include, for example, petroleum fractions having 8 to 10 carbon atoms, such as vinyltoluene, alkylstyrene, coumarone, indene, methylindene, dicyclopentadiene, and the like. These C9-based resins may be used alone, or two or more thereof may be used in combination.

## <<C5-based resin>>

A "C5-based resin" means a resin obtained by polymerizing C5 fractions and may be those undergoing hydrogeneration or modification. Examples of C5 fractions include, for example, petroleum fractions having 4 to 5 carbon atoms, such as cyclopentadiene, isoprene, pentane, isopentane, neopentane, pentene, pentadiene, and the like. These C5-based resins may be used alone, or two or more thereof may be used in combination.

## <<C5/C9-based resin>>

A "C5/C9-based resin" means a resin obtained by copolymerizing the above-described C5 fractions and the above-described C9 fractions and may be those undergoing hydrogeneration or modification. As the C5/C9-based resin, for example, those commercially available from Tosoh Corporation, Zibo Luhua Hongjin New Material Group Co., Ltd, etc. can be used. These C5/C9-based resins may be used alone, or two or more thereof may be used in combination.

## <<Coumarone-based resin>>

A "coumarone-based resin" means a resin comprising coumarone as a monomer component and may be those undergoing hydrogeneration or modification. Examples of the coumarone-based resin include, for example, a coumarone-indene resin comprising coumarone and indene as a monomer component; a coumarone-indene-styrene resin comprising coumarone, indene, and styrene as a monomer component; and the like. These coumarone-based resins may be used alone, or two or more thereof may be used in combination.

## <<Indene-based resin>>

An "indene-based resin" means a resin comprising indene as a monomer component and may be those undergoing hydrogeneration or modification. Examples of the indene-based resin include, for example, a coumarone-indene resin comprising coumarone and indene as a monomer component; a coumarone-indene-styrene resin comprising coumarone, indene, and styrene as a monomer component; and the like. These indene-based resins may be used alone, or two or more thereof may be used in combination.

## <<Terpene-based resin>>

A "terpene-based resin" means a resin comprising, as a monomer component whose content is the highest in the resin, a terpene compound such as $\alpha$-pinene, $\beta$-pinene, limonene, dipentene, and the like and may be those undergoing hydrogeneration or modification. Specific examples of the terpene-based resin include, for example, a polyterpene resin comprising, as a monomer component, only one or more terpene compounds described above; an aromatic modified terpene resin comprising, as a monomer component, a terpene compound described above and an aromatic compound; a terpene phenol resin comprising, as a monomer component, a terpene compound described above and a phenol-based compound; and the like. Examples of the aromatic compound that becomes a monomer component of the aromatic modified terpene resin include, for example, styrene, $\alpha$-methylstyrene, vinyltoluene, divinyltoluene, and the like. Examples of the phenol-based compound that becomes a monomer component of the terpene phenol resin include, for example, phenol, bisphenol A, cresol, xylenol, and the like. These terpene-based resins may be used alone, or two or more thereof may be used in combination.

## <<Rosin-based resin>>

A "rosin-based resin" means a resin comprising a rosin acid compound such as abietic acid, neoabietic acid, palustric acid, isopimaric acid, and the like and may be those undergoing hydrogeneration or modification. Examples of the rosin-based resin include, but not particularly limited to, for example, a natural resin rosin, and a rosin-modified resin obtained by modifying it by hydrogenation, disproportionation, dimerization, esterification, or the like. These rosin-based resins may be used alone, or two or more thereof may be used in combination.

## <<Phenol-based resin>>

A "phenol-based resin" means a resin comprising, as a monomer component whose content is the highest in the resin, a phenol compound such as phenol, cresol, and the like. Examples of the phenol-based resin include, but not particularly limited to, a phenol formaldehyde resin, an alkylphenol formaldehyde resin, an alkylphenol acetylene resin, an oil-modified phenol formaldehyde resin, and the like. These phenol-based resins may be used alone, or two or more thereof may be used in combination.

<<Softening point>>

A softening point of a resin is preferably higher than 80°C, more preferably higher than 90°C, further preferably higher than 100°C, from the viewpoint of wet grip performance. Moreover, it is preferably lower than 150°C, more preferably lower than 140°C, further preferably lower than 130°C, from the viewpoints of processability and improvement in dispersibility of a filler in a rubber component. The softening point of the resin is measured by the above-described measuring method.

<<Content>>

A content of resin based on 100 parts by mass of the rubber component is preferably greater than 1 part by mass, more preferably 5 parts by mass or more, further preferably greater than 5 parts by mass. On the other hand, the content is preferably less than 60 parts by mass, more preferably less than 30 parts by mass, further preferably less than 20 parts by mass, from the viewpoint of suppression of heat generation.

(Softening agent other than resin)

An oil, a liquid rubber, and an ester-based plasticizing agent which are softening agents other than resin will be described.

<<Oil>>

Examples of oil include, for example, mineral oils, vegetable oils, animal oils, and the like. Moreover, from the viewpoint of a life cycle assessment, one obtained by refining a waste oil after use for a rubber mixing machine or an engine or waste cooking oil used in a cooking facility may also be used. The oil may be used alone, or two or more thereof may be used in combination.

A "mineral oil" refers to oil derived from mineral resources such as petroleum, natural gas, and the like. Examples of the mineral oil include paraffinic oils (mineral oils), naphthenic oils, aromatic oils, and the like. Specific examples of the mineral oils include, for example, MES (Mild Extracted Solvate), DAE (Distillate Aromatic Extract), TDAE (Treated Distillate Aromatic Extract), TRAE (Treated Residual Aromatic Extract), RAE (Residual Aromatic Extract), and the like. Moreover, as an environmental measure, oils each having a low content of a polycyclic aromatic compound (PCA) can also be used. Examples of the oils each having a low content of a PCA include MES, TDAE, heavy naphthenic oil, and the like.

Examples of the vegetable oil include, for example, a linseed oil, a rapeseed oil, a safflower oil, a soybean oil, a corn oil, a cottonseed oil, a rice bran oil, a tall oil, a sesame oil, perilla oil, a castor oil, a tung oil, a pine oil, a pine tar oil, a sunflower oil, a coconut oil, a palm oil, a palm kernel oil, an olive oil, a camellia oil, a jojoba oil, a macadamia nut oil, a peanut oil, a grapeseed oil, a Japan wax, and the like. Furthermore, examples of the vegetable oil also include a refined oil obtained by refining the above-described oil (a salad oil, etc.), a transesterified oil obtained by transesterifying the above-described oil, a hydrogenated oil obtained by hydrogenating the above-described oil, a thermally polymerized oil obtained by thermally polymerizing the above-described oil, an oxidized polymerized oil obtained by oxidizing the above-described oils, a waste cooking oil obtained by recovering what was utilized as an edible oil, etc., and the like. Besides, the vegetable oil may be liquid or solid at 25°C.

The vegetable oil preferably comprises acylglycerol, and more preferably comprises triacylglycerol. Besides, in the present specification, acylglycerol refers to a compound in which a hydroxy group of glycerin and a fatty acid are ester-bonded. The acylglycerol is not particularly limited and may be 1-monoacylglycerol, 2-monoacylglycerol, 1,2-diacylglycerol, 1,3-diacylglycerol, or triacylglycerol. Furthermore, the acylglycerol may be a monomer, a dimer, or a multimer that is a trimer or higher. Besides, acylglycerol that is a dimer or higher can be obtained by thermal polymerization, oxidative polymerization, or the like. Moreover, the acylglycerol may be liquid or solid at 25°C.

Whether the rubber composition comprises the above-described acylglycerol can be confirmed by, but not particularly limited to, $^1$H-NMR measurement. For example, a heavy chloroform in which a rubber composition containing triacylglycerol is immersed at 25°C for 24 hours and then removed is subjected to $^1$H-NMR measurement at room temperature, and signals near 5.26 ppm, near 4.28 ppm, and near 4.15 ppm are observed under a condition that a signal of tetramethylsilane (TMS) is set to 0.00 ppm. These signals are presumed to be derived from hydrogen atoms bonded to carbon atoms adjacent to oxygen atoms of the ester group. Besides, "near" in this paragraph shall be a range of $\pm 0.10$ ppm.

The above-described fatty acid is not particularly limited and may be an unsaturated fatty acid or a saturated fatty acid. Examples of the unsaturated fatty acid include monounsaturated fatty acids such as oleic acid and the like; and polyunsaturated fatty acids such as linoleic acid, linolenic acid, and the like. Moreover, examples of the saturated fatty acid include butyric acid, lauric acid, and the like.

Among them, as the above-described fatty acid, a fatty acid having few double bonds, that is, a saturated fatty acid or a monounsaturated fatty acid is desired, and oleic acid is preferable. As a vegetable oil comprising such fatty acid, for example, a vegetable oil comprising a saturated fatty acid or a monounsaturated fatty acid or a vegetable oil refined by transesterification or the like may be used. Moreover, in order to produce a vegetable oil comprising such fatty acid, a plant may be improved by selective breeding, gene recombination, genome editing, or the like.

As a vegetable oil, for example, those commercially available from Idemitsu Kosan Co., Ltd., Sankyo Yuka Kogyo K. K., ENEOS Corporation, Olisoy, H&R Group, HOKOKU Corporation, Fuji Kosan Co., Ltd., The Nisshin Oillio Group, etc. can be used.

Examples of the animal oils include fish oils, beef tallow, oleyl alcohol derived therefrom, and the like.

A content of oil when compounded based on 100 parts by mass of the rubber component is preferably 5 parts by mass or more, more preferably 10 parts by mass or more, further preferably 15 parts by mass or more, from the viewpoint of processability. Moreover, it is preferably 120 parts by mass or less, more preferably 60 parts by mass or less, further preferably 30 parts by mass or less, from the viewpoint of abrasion resistance. The content of oil also includes an amount of oil contained in an oil-extended rubber.

<<Liquid rubber>>

The liquid rubber is not particularly limited as long as it is a polymer in a liquid state at 25°C, examples of which include, for example, a liquid butadiene rubber (liquid BR), a liquid styrene-butadiene rubber (liquid SBR), a liquid isoprene rubber (liquid IR), a liquid styrene-isoprene rubber (liquid SIR), a liquid farnesene rubber, and the like. The liquid rubber may be used alone, or two or more thereof may be used in combination.

A content of a liquid rubber when compounded based on 100 parts by mass of the rubber component is preferably 1 part by mass or more, more preferably 3 parts by mass or more, further preferably 5 parts by mass or more. Moreover, the content of the liquid rubber is preferably 50 parts by mass or less, more preferably 30 parts by mass or less, further preferably 10 parts by mass or less. The content of the liquid rubber also includes an amount of an extending liquid rubber used for extending a rubber component.

<<Ester-based plasticizing agent>>

Examples of the ester-based plasticizing agent include, for example, dibutyl adipate (DBA), diisobutyl adipate (DIBA), dioctyl adipate (DOA), di(2-ethylhexyl) azelate (DOZ), dibutyl sebacate (DBS), diisononyl adipate (DINA), diethyl phthalate (DEP), dioctyl phthalate (DOP), diundecyl phthalate (DUP), dibutyl phthalate (DBP), dioctyl sebacate (DOS), tributyl phosphate (TBP), trioctyl phosphate (TOP), triethyl phosphate (TEP), trimethyl phosphate (TMP), thymidine triphosphate (TTP), tricresyl phosphate (TCP), trixylenyl phosphate (TXP), and the like. These ester-based plasticizing agents may be used alone, or two or more thereof may be used in combination.

A content of an ester-based plasticizing agent when compounded based on 100 parts by mass of the rubber component is preferably 1 part by mass or more, more preferably 3 parts by mass or more, further preferably 5 parts by mass or more. Moreover, the content of ester-based plasticizing agent is preferably 50 parts by mass or less, more preferably 30 parts by mass or less, further preferably 10 parts by mass or less. The content of the ester-based plasticizing agent also includes an amount of an extending ester-based plasticizing agent used for extending a rubber component.

(Vulcanized rubber particle)

The vulcanized rubber particle is a particle made of a vulcanized rubber. Specifically, a rubber powder specified in JIS K 6316:2017, and the like can be used. A recycled rubber powder produced from a pulverized product of a waste tire and the like is preferable from the viewpoints of consideration for environment and cost. The vulcanized rubber particle may be used alone, or two or more thereof may be used in combination.

The vulcanized rubber particle is not particularly limited and may be a non-modified vulcanized rubber particle or a modified vulcanized rubber particle. As a commercially available product of a vulcanized rubber, for example, products manufactured by Lehigh Technologies, Muraoka Rubber Reclaiming Co., Ltd. etc. can be used.

A content of a vulcanized rubber particle when compounded based on 100 parts by mass of the rubber component can be appropriately adjusted, for example, within a range of greater than 1 part by mass and less than 80 parts by mass.

(Antioxidant)

Examples of the antioxidant include, but not particularly limited to, a naphthylamine-based antioxidant such as phenyl-$\alpha$-naphthylamine and the like; a diphenylamine-based antioxidant such as octylated diphenylamine, 4,4'-bis($\alpha,\alpha'$-dimethylbenzyl)diphenylamine, and the like; a p-phenylenediamine-based antioxidant such as N-isopropyl-N'-phenyl-p-phenylenediamine, N-(1,3-dimethylbutyl)-N'-phenyl-p-phenylenediamine (6PPD), N,N'-bis(1,4-dimethylpentyl)-p-phenylenediamine (77PD), N,N'-diphenyl-p-phenylenediamine (DPPD), N,N'-ditolyl-p-phenylenediamine (DTPD), N-isopropyl-N'-phenyl-p-phenylenediamine (IPPD), N,N'-di-2-naphthyl-p-phenylenediamine (DNPD), and the like; a quinoline-based antioxidant such as a polymer of 2,2,4-trimethyl-1,2-dihydroquinoline and the like; a monophenol-based antioxidant such as 2,6-di-t-butyl-4-methylphenol, styrenated phenol, and the like; bisphenol-based, trisphenol-based, or polyphenol-based antioxidants such as tetrakis-[methylene-3-(3',5'-di-t-butyl-4'-hydroxyphenyl) propionate]methane and the like; and the like. Among them, the p-phenylenediamine-based antioxidant and the quinoline-based antioxidant are preferable, and N-(1,3-dimethylbutyl)-N'-phenyl-p-phenylenediamine and a polymer of 2,2,4-trimethyl-1,2-dihydroquinoline are more preferable. As the commercially-available product, for example, products manufactured by Seiko Chemical Co., Ltd., Sumitomo Chemical Co., Ouchi Shinko Chemical Industry Co., Flexsys, etc. can be used. The antioxidant may be used alone, or two or more thereof may be used in combination.

A content of an antioxidant when compounded based on 100 parts by mass of the rubber component is preferably 0.5 parts by mass or more, more preferably 1 part by mass or more, from the viewpoint of ozone crack resistance of a rubber. Moreover, it is preferably 10 parts by mass or less, more preferably 5 parts by mass or less, from the viewpoints of abrasion resistance and wet grip performance.

(Wax)

Wax is not particularly limited, and any of those commonly used in the tire industry can be appropriately used, examples of which include, for example, a mineral-based wax, a plant-derived wax, and the like. The mineral-based wax refers to a wax derived from mineral resources such as oil, natural gas, and the like. The plant-derived wax refers to a wax derived from natural resources such as plants. Among them, the mineral-based wax is preferable. Examples of the plant-derived wax include, for example, a rice bran wax, a carnauba wax, a candelilla wax, and the like. Examples of the mineral-based wax include, for example, a paraffin wax, a microcrystalline wax, a specially selected wax thereof, and the like, and the paraffin wax is preferable. Besides, the wax relating to the present embodiment shall not include stearic acid. As wax, for example, those commercially available from Ouchi Shinko Chemical Industry Co., Nippon Seiro Co., Ltd., PARAMELT, etc. can be used. The wax may be used alone, or two or more thereof may be used in combination.

A content of wax when compounded based on 100 parts by mass of the rubber component is preferably 0.5 parts by mass or more, more preferably 1 part by mass or more, from the viewpoint of weather resistance of a rubber. Moreover, it is preferably 10 parts by mass or less, more preferably 5 parts by mass or less, from the viewpoint of prevention of whitening of a tire due to bloom.

(Processing aid)

Examples of processing aid include, for example, a fatty acid metal salt, a fatty acid amide, an amide ester, a silica surfactant, a fatty acid ester, a mixture of a fatty acid metal salt and an amide ester, a mixture of a fatty acid metal salt and a fatty acid amide, and the like. As processing aid, for example, those commercially available from Schill+Seilacher GmbH, Performance Additives, etc. can be used. The processing aid may be used alone, or two or more thereof may be used in combination.

A content of processing aid when compounded based on 100 parts by mass of the rubber component is preferably 0.5 parts by mass or more, more preferably 1 part by mass or more, from the viewpoint of exhibiting an effect of improving processability. Moreover, it is preferably 10 parts by mass or less, more preferably 8 parts by mass or less, further preferably 5 parts by mass or less, from the viewpoints of abrasion resistance and breaking strength.

(Stearic acid)

A content of stearic acid when compounded based on 100 parts by mass of the rubber component is preferably 0.5 parts by mass or more, more preferably 1 part by mass or more, from the viewpoint of processability. Moreover, it is preferably 10 parts by mass or less, more preferably 5 parts by mass or less, from the viewpoint of vulcanization rate.

(Zinc oxide)

A content of zinc oxide when compounded based on 100 parts by mass of the rubber component is preferably 0.5 parts by mass or more, more preferably 1.0 parts by mass or more, further preferably 1.5 part by mass or more, from the viewpoint of processability. Moreover, it is preferably 5.0 parts by mass or less, more preferably 4.5 parts by mass or less, further preferably 4.0 parts by mass or less, from the viewpoint of abrasion resistance.

(Vulcanizing agent)

Sulfur is appropriately used as a vulcanizing agent. As sulfur, a powdery sulfur, an oil processing sulfur, a precipitated sulfur, a colloidal sulfur, an insoluble sulfur, a highly dispersible sulfur, and the like can be used. The vulcanizing agent can be used alone, or two or more thereof can be used in combination.

A content of sulfur when compounded as a vulcanizing agent based on 100 parts by mass of the rubber component is preferably 0.1 parts by mass or more, more preferably 0.3 parts by mass or more, further preferably 0.5 parts by mass or more, from the viewpoint of securing a sufficient vulcanization reaction. Moreover, it is preferably 5.0 parts by mass or less, more preferably 4.0 parts by mass or less, further preferably 3.0 parts by mass or less, from the viewpoint of prevention of deterioration. Besides, a content of a vulcanizing agent when an oil-containing sulfur is used as the vulcanizing agent is defined as a total content of pure sulfur contained in the oil-containing sulfur.

Examples of vulcanizing agents other than sulfur include, for example, an alkylphenol-sulfur chloride condensate, sodium hexamethylene-1,6-bisthiosulfate dihydrate, 1,6-bis(N,N'-dibenzylthiocarbamoyldithio)hexane), and the like. As these vulcanizing agents other than sulfur, those commercially available from Taoka Chemical Co., Ltd., LANXESS, Flexsys, etc. can be used. The vulcanizing agent can be used alone, or two or more thereof can be used in combination.

(Vulcanization accelerator)

Examples of the vulcanization accelerator include, for example, sulfenamide-based, thiazole-based, thiuram-based, thiourea-based, guanidine-based, dithiocarbamic acid-based, aldehyde-amine-based or aldehyde-ammonia-based, imidazoline-based, and xanthate-based vulcanization accelerators, and the like. Among them, the sulfenamide-based vulcanization accelerator, the thiazole-based vulcanization accelerator, and the guanidine-based vulcanization accelerator are preferable. The vulcanization accelerator may be used alone, or two or more thereof may be used in combination.

Examples of the sulfenamide-based vulcanization accelerator include, for example, N-tert-butyl-2-benzothiazolyl sulfenamide (TBBS), N-cyclohexyl-2-benzothiazolyl sulfenamide (CBS), N,N-dicyclohexyl-2-benzothiazolyl sulfenamide (DCBS), and the like. Among them, N-cyclohexyl-2-benzothiazolyl sulfenamide (CBS) is preferable.

Examples of the thiazole-based vulcanization accelerator include, for example, 2-mercaptobenzothiazole, a cyclohexylamine salt of 2-mercaptobenzothiazole, di-2-benzothiazolyl disulfide, and the like. Among them, 2-mercaptobenzothiazole is preferable.

Examples of the guanidine-based vulcanization accelerator include, for example, 1,3-diphenylguanidine (DPG), 1,3-di-o-tolylguanidine, 1-o-tolylbiguanide, di-o-tolylguanidine salt of dicatecholborate, 1,3-di-o-cumenylguanidine, 1,3-di-o-biphenylguanidine, 1,3-di-o-cumenyl-2-propionylguanidine, and the like. Among them, 1,3-diphenylguanidine (DPG) is preferable.

A content of a vulcanization accelerator when compounded based on 100 parts by mass of the rubber component is preferably 1 part by mass or more, more preferably 1.5 parts by mass or more. Moreover, the content of the vulcanization accelerator based on 100 parts by mass of the rubber component is preferably 8 parts by mass or less, more preferably 7 parts by mass or less, further preferably 6 parts by mass or less. When the content of the vulcanization accelerator is within the above-described ranges, breaking strength and elongation tend to be secured.

<Various materials comprising carbon atoms>

In the present specification, various materials each having a carbon atom (for example, a rubber, oil, resin, a vulcanization accelerator, an antioxidant, a surfactant, and the like) may be derived from carbon dioxide in the atmosphere. These various materials can be obtained by converting carbon dioxide directly or converting methane obtained via a process of methanation by which methane is synthesized from carbon dioxide.

<Hardness of rubber composition>

Hardness of the rubber composition is preferably 64 or more and 80 or less. The hardness is preferably 65 or more, more preferably 66 or more, further preferably 67 or more, from the viewpoint of ride comfort. On the other hand, the hardness is preferably 75 or less, more preferably 70 or less, further preferably 68 or less, from the viewpoint of maintaining flexibility as a rubber. The hardness of the rubber composition is a value measured by the above-described measuring method.

The hardness of the rubber composition can be adjusted by types or amounts of components compounded in the rubber composition. For example, the hardness tends to be decreased when an amount of a softening agent is increased, the hardness tends to be increased when an amount of a softening agent is decreased, the hardness tends to be increased when an amount of a filler is increased, the hardness tends to be decreased when an amount of a filler is decreased, the hardness tends to be decreased when an amount of sulfur or a vulcanization accelerator is decreased, and the hardness tends to be increased when an amount of sulfur or a vulcanization accelerator is increased.

[Production method]

The rubber composition can be produced by a known method. For example, it can be produced by kneading the above-described components with a rubber kneading machine such as an open roll, a sealed type kneader (a Banbury mixer, a kneader, and the like), and the like.

The kneading step includes, for example, a base kneading step of kneading compounding agents and additives other than a vulcanizing agent and a vulcanization accelerator; and a final kneading (F-kneading) step of adding the vulcanizing agent and the vulcanization accelerator to the kneaded product obtained in the base kneading step and kneading them. Additionally, the base kneading step can also be divided into multiple steps as necessary.

Examples of kneading conditions include, but not particularly limited to, for example, a method of kneading at a discharge temperature of 150°C to 170°C for 3 to 10 minutes in the base kneading step and kneading at 70°C to 110°C for 1 to 5 minutes in the final kneading step.

The heavy-duty tire relating to the present embodiment can be produced using the above-described rubber composition by a usual method. That is, the tire can be produced by extruding the unvulcanized rubber composition into a shape of a tread with an extruder equipped with a mouthpiece having a predetermined shape, attaching the extruded unvulcanized tread together with other tire members while making an adjustment so that it has a predetermined tire structure, and molding them by a usual method, on a tire forming machine, to form an unvulcanized tire, followed by heating and pressurizing this unvulcanized tire in a vulcanizing machine. Examples of the vulcanization condition include, but not particularly limited to, for example, a method of vulcanizing at 140°C to 170°C for 10 to 40 minutes.

[Application]

The tire relating to the present embodiment can be used as a heavy-duty tire. Moreover, although the tire relating to the present embodiment is not limited to the use as a pneumatic tire and can also be used as, for example, an airless tire, the tire relating to the present embodiment is preferably used as a pneumatic tire. Here, the heavy-duty tire is a tire not only for large trucks and buses but also for small trucks, buses, vans, and the like, and the heavy-duty tire is a tire having a maximum load capacity greater than 1000 kg. Moreover, in a case where the tire relating to the present embodiment is applied to a large truck or bus, its maximum load capacity is preferably 1400 kg or more.

EXAMPLE

Hereinafter, examples considered to be preferable in implementing the present invention (Examples) will be described, though the scope of the present invention is not limited to only these Examples. Results, which are calculated based on evaluation methods described below considering a tire having a rubber layer comprising a tread surface and a tire structure, the tire being obtained in accordance with each Tables using various chemicals described below, are shown in the lower part of each Table.

[Various chemicals]

Various chemicals used in Examples and Comparative examples are collectively shown below.

NR: TSR20
SBR: SOL R C2525 manufactured by VERSALIS (S-SBR, styrene content: 26% by mass, vinyl content: 24 mol%, Tg: -50°C, Mw: 600000)
BR: BUNA CB24 manufactured by ARLANXEO. (Butadiene rubber synthesized using a Nd-based catalyst, cis content: 96 mol%, vinyl content: 0.7 mol%, Mw: 500000)
CB (carbon black): DIABLACK N134 manufactured by Mitsubishi Chemical Corporation ($N_2SA$: 148 $m^2/g$, average primary particle size: 18 nm)
Silica 1: Ultrasil VN3 manufactured by Evonik Industries AG ($N_2SA$: 175 $m^2/g$, average primary particle size: 18 nm)
Silica 2: Ultrasil 9100GR manufactured by Evonik Industries AG ($N_2SA$: 230 $m^2/g$, average primary particle size: 15 nm)

Coupling agent (silane coupling agent): Si266 manufactured by Evonik Industries AG (bis(3-triethoxysilylpropyl) disulfide)

Antioxidant: Nocrac 6C (6PPD) manufactured by Ouchi Shinko Chemical Industry Co., Ltd. (N-(1,3-dimethylbutyl)-N'-phenyl-p-phenylenediamine)

Wax: OZOACE 0355 manufactured by Nippon Seiro Co., Ltd. (paraffin wax)

Stearic acid: Bead stearic acid "CAMELLIA" manufactured by NOF CORPORATION

Zinc oxide: Zinc oxide No. 1 manufactured by Mitsui Mining & Smelting Co., Ltd.

Sulfur: HK-200-5 manufactured by Hosoi Chemical Industry Co., Ltd. (5% oil-containing powdered sulfur)

Vulcanization accelerator: Nocceler CZ manufactured by Ouchi Shinko Chemical Industry Co., Ltd. (N-cyclohexyl-2-benzothiazolylsulfenamide (CBS))

[Examples and Comparative examples]

According to the compounding formulations shown in each Table, using a 1.7 L closed Banbury mixer, all chemicals other than sulfur and a vulcanization accelerator are kneaded until a temperature reaches a discharge temperature at 150°C to 160°C for 1 to 10 minutes to obtain a kneaded product. Next, using a twin-screw open roll, sulfur and the vulcanization accelerator are added to the obtained kneaded product, and the mixture is kneaded for 4 minutes until the temperature reaches 105°C to obtain an unvulcanized rubber composition. The obtained unvulcanized rubber composition is molded into a shape of a rubber layer comprising a tread surface with an extruder equipped with a mouthpiece having a predetermined shape and attached together with other tire members while making an adjustment so that it has a predetermined tire structure, to prepare an unvulcanized tire, followed by press-vulcanized under a condition at 150°C for 35 minutes, thereby producing each test tire (tire size: 275/80R22.5, a tire for truck/bus).

In each Table, in a case where "Presence" is shown for "Flask-like circumferential groove", a flask-like circumferential groove is arranged on a tire center line as shown in FIG. 2. In a case where "Absence" is shown for "Flask-like circumferential groove", an ordinary circumferential groove having no flask shape, which is formed in accordance with the minimum groove width of a neck part and a depth of the deepest part of the above-described flask-like circumferential groove, is arranged. In a case where "Presence" is shown for "Flask-like width direction sipe", a flask-like width direction sipe is arranged on a center land part as shown in FIG. 2. In a case where "Absence" is shown for "Flask-like width direction sipe", an ordinary width direction sipe having no flask shape, which is formed in accordance with the minimum groove width of a neck part and a depth of the deepest part of the above-described flask-like width direction sipe, is arranged. A reinforcing layer comprising belt plies and a band ply is arranged on an inner side of a tread in a tire radial direction as shown in FIG. 5. The band ply is of a form in which its both ends are arranged to be opposite to each other with respect to an equatorial plane sandwiched between these ends, that is, a form so-called a "full band". In this case, "1/2" for "Position of band ply" means that the band ply is arranged between the first belt ply and the second belt ply, of two belt plies in total, from the inner side in the tire radial direction, and "2/2" for "Position of band ply" means that the band ply is arranged on the outer side of the two belt plies in total in the tire radial direction.

[Evaluation]

Results measured by a method described below for each test tire are described in the corresponding columns in Table described below. Unless otherwise specified, each test tire is used after made into a standardized state.

<Hardness of rubber composition>

A sample for measurement of hardness is prepared by cutting out a tread part from a tread part forming a ground-contacting surface of a test tire so that the tire radial direction becomes a thickness direction, and hardness of a rubber composition is measured at 23°C according to JIS K 6253-3:2012 while pressing a type-A durometer against the sample from the ground-contacting surface side.

<Fuel efficiency>

For each test tire, a rolling resistance coefficient (RRC) is measured using a rolling resistance tester when the test tire is made to run on a drum at a speed of 80 km/h under the following condition. Results are indicated as indices with the reference Comparative example being as 100. The larger the numerical value is, the lower the rolling resistance of the tire is.

Rim: 22.5×8.25

Internal pressure: 900 kPa
Vertical load: 28.76 kN

<Abrasion resistance>

Each test tire is mounted on all wheels of a test vehicle, a groove depth of a tread part of the tire is measured after the vehicle is made to run 8000 km, and a running distance when the groove depth of the tire decreases by 1 mm is calculated. Results are indicated as indices with a running distance when a groove of a tire in the reference Comparative example decreases by 1 mm being as 100. The results show that the higher the index is, the better the abrasion resistance is.

Table 1

| | Example | | | | | | |
|---|---|---|---|---|---|---|---|
| | 1 | 2 | 3 | 4 | 5 | 6 | 7 |
| Structure | | | | | | | |
| Flask-like circumferential groove | Absence | Absence | Absence | Absence | Absence | Absence | Absence |
| Flask-like width direction sipe | Absence | Absence | Absence | Absence | Absence | Absence | Absence |
| Position of band ply | 1/2 | 1/2 | 1/2 | 1/2 | 1/2 | 1/2 | 1/2 |
| Compounding amount (parts by mass) | | | | | | | |
| NR | 86 | 86 | 86 | 86 | 86 | 86 | 91 |
| SBR | 6 | 6 | 6 | 6 | 6 | 6 | - |
| BR | 8 | 8 | 8 | 8 | 8 | 8 | 9 |
| CB | 20 | 20 | 20 | 15 | 11 | 5 | 20 |
| Silica 1 | 35 | 35 | - | - | - | - | 35 |
| Silica 2 | - | - | 31 | 36 | 45 | 57 | - |
| Coupling agent | 2.8 | 2.8 | 3.1 | 3.6 | 4.5 | 5.7 | 2.8 |
| Resin | - | - | - | - | - | - | - |
| Antioxidant | 1.5 | 1.5 | 1.5 | 1.5 | 1.5 | 1.5 | 1.5 |
| Wax | 1.5 | 1.5 | 1.5 | 1.5 | 1.5 | 1.5 | 1.5 |
| Stearic acid | 3.0 | 3.0 | 3.0 | 3.0 | 3.0 | 3.0 | 3.0 |
| Zinc oxide | 3.0 | 3.0 | 3.0 | 3.0 | 3.0 | 3.0 | 3.0 |
| Sulfur | 1.4 | 1.7 | 1.7 | 1.7 | 1.7 | 1.7 | 1.7 |
| Vulcanization accelerator | 1.4 | 1.7 | 1.7 | 1.7 | 1.7 | 1.7 | 1.7 |
| Hardness of rubber composition (Hs) | 64 | 67 | 67 | 68 | 68 | 68 | 67 |

| | Example | | | | | | |
|---|---|---|---|---|---|---|---|
| | 1 | 2 | 3 | 4 | 5 | 6 | 7 |
| Average primary particle size of silica (nm) | 18 | 18 | 15 | 15 | 15 | 15 | 18 |
| $A_{IR}$ (%) | 86 | 86 | 86 | 86 | 86 | 86 | 91 |
| $A_{SIL}$ (%) | 63.6 | 63.6 | 60.8 | 70.6 | 80.4 | 91.9 | 63.6 |
| $D_{CG}$ (mm) | 15 | 15 | 15 | 15 | 15 | 15 | 15 |
| Inequality (1) $A_{IR} \times A_{SIL} / D_{CG}$ | 365 | 365 | 348 | 405 | 461 | 527 | 386 |
| Fuel efficiency | 102 | 112 | 112 | 113 | 114 | 116 | 115 |
| Abrasion resistance | 102 | 97 | 102 | 99 | 96 | 93 | 100 |
| Overall performance | 204 | 209 | 214 | 212 | 210 | 209 | 215 |

| | Example | | | | | |
|---|---|---|---|---|---|---|
| | 8 | 9 | 10 | 11 | 12 | 13 |
| **Structure** | | | | | | |
| Flask-like circumferential groove | Absence | Absence | Presence | Presence | Absence | Presence |
| Flask-like width direction sipe | Absence | Absence | Absence | Presence | Absence | Presence |
| Position of band ply | 1/2 | 1/2 | 1/2 | 1/2 | 2/2 | 1/2 |
| **Compounding amount (parts by mass)** | | | | | | |
| NR | 86 | 86 | 86 | 86 | 86 | 100 |
| SBR | 6 | 6 | 6 | 6 | 6 | - |
| BR | 8 | 8 | 8 | 8 | 8 | - |
| CB | 20 | 20 | 20 | 20 | 20 | 12 |
| Silica 1 | 35 | 35 | 35 | 35 | 35 | 40 |
| Silica 2 | - | - | - | - | - | - |
| Coupling agent | 2.8 | 2.8 | 2.8 | 2.8 | 2.8 | 3.2 |
| Resin | - | - | - | - | - | - |
| Antioxidant | 1.5 | 1.5 | 1.5 | 1.5 | 1.5 | 1.5 |
| Wax | 1.5 | 1.5 | 1.5 | 1.5 | 1.5 | 1.5 |
| Stearic acid | 3.0 | 3.0 | 3.0 | 3.0 | 3.0 | 3.0 |
| Zinc oxide | 3.0 | 3.0 | 3.0 | 3.0 | 3.0 | 3.0 |
| Sulfur | 1.7 | 1.7 | 1.7 | 1.7 | 1.7 | 1.7 |
| Vulcanization accelerator | 1.7 | 1.7 | 1.7 | 1.7 | 1.7 | 1.7 |
| Hardness of rubber composition (Hs) | 67 | 67 | 67 | 67 | 67 | 66 |
| Average primary particle size of silica (nm) | 18 | 18 | 18 | 18 | 18 | 18 |
| $A_{IR}$ (%) | 86 | 86 | 86 | 86 | 86 | 100 |
| $A_{SIL}$ (%) | 63.6 | 63.6 | 63.6 | 63.6 | 63.6 | 76.9 |

| | Example | | | | | |
|---|---|---|---|---|---|---|
| | 8 | 9 | 10 | 11 | 12 | 13 |
| $D_{CG}$ (mm) | 14 | 13 | 15 | 15 | 15 | 15 |
| Inequality (1) $A_{IR} \times A_{SIL}/D_{CG}$ | 391 | 421 | 365 | 365 | 365 | 513 |
| Fuel efficiency | 114 | 116 | 114 | 115 | 113 | 117 |
| Abrasion resistance | 99 | 97 | 99 | 100 | 99 | 97 |
| Overall performance | 213 | 213 | 213 | 215 | 212 | 214 |

Table 2

| | Comparative example | | | | |
|---|---|---|---|---|---|
| | 1 | 2 | 3 | 4 | 5 |
| **Structure** | | | | | |
| Flask-like circumferential groove | Absence | Absence | Absence | Absence | Absence |
| Flask-like width direction sipe | Absence | Absence | Absence | Absence | Absence |
| Position of band ply | 1/2 | 1/2 | 1/2 | 1/2 | 1/2 |
| **Compounding amount (parts by mass)** | | | | | |
| NR | 80 | 86 | 80 | 86 | 86 |
| SBR | 10 | 6 | 10 | 6 | 6 |
| BR | 10 | 8 | 10 | 8 | 8 |
| CB | 32 | 50 | 15 | 21 | 20 |
| Silica 1 | 20 | - | - | 31 | 35 |

(continued)

| Compounding amount (parts by mass) | | | | | |
|---|---|---|---|---|---|
| Silica 2 | - | - | 36 | - | - |
| Coupling agent | 1.6 | - | 3.6 | 2.5 | 2.8 |
| Resin | - | - | - | - | - |
| Antioxidant | 1.5 | 1.5 | 1.5 | 1.5 | 1.5 |
| Wax | 1.5 | 1.5 | 1.5 | 1.5 | 1.5 |
| Stearic acid | 3.0 | 3.0 | 3.0 | 3.0 | 3.0 |
| Zinc oxide | 3.0 | 3.0 | 3.0 | 3.0 | 3.0 |
| Sulfur | 1.4 | 1.4 | 1.4 | 1.4 | 1.4 |
| Vulcanization accelerator | 1.4 | 1.4 | 1.4 | 1.4 | 1.4 |
| Hardness of rubber composition (Hs) | 63 | 64 | 63 | 63 | 64 |

| | Comparative example | | | | |
|---|---|---|---|---|---|
| | 1 | 2 | 3 | 4 | 5 |
| Average primary particle size of silica (nm) | 18 | - | 15 | 18 | 18 |
| $A_{IR}$ (%) | 80 | 86 | 80 | 86 | 86 |
| $A_{SIL}$ (%) | 38.5 | 0.0 | 70.6 | 59.6 | 63.6 |
| $D_{CG}$ (mm) | 19 | 19 | 15 | 15 | 16 |
| Inequality (1) $A_{IR} \times A_{SIL}/D_{CG}$ | 162 | 0 | 376 | 342 | 342 |
| Fuel efficiency | 87 | 82 | 93 | 96 | 100 |
| Abrasion resistance | 102 | 107 | 97 | 96 | 100 |
| Overall performance | 189 | 189 | 190 | 192 | 200 |

REFERENCE SIGNS LIST

1. Heavy-duty tire
2. Tread surface
3. Tread part
4. Cap rubber layer
5. Base rubber layer
6. Reinforcing layer
7. Belt
7a, 7b. Belt ply
8. Band ply
9. Covering rubber
10. Bead part
11. Bead core
12. Apex
13. Circumferential main groove
14. Flask-like circumferential groove
15. Shoulder land part
16. Center land part
17. Lug groove
18. Flask-like width direction sipe
19. Neck part
20. Trunk part
CL. Tire center line (equator)
$D_{CG}$. Depth of deepest part of circumferential main grooves
W. Tire width direction

TW. Tread ground-contacting width
Te. Tread ground-contacting end
W11, W21. Minimum groove width of neck part
W12, W22. Maximum groove width of trunk part
W3. Maximum value of groove width, of circumferential main groove, perpendicular to extending direction
H11, H21. Depth of flask-like groove, sipe
H12, H22. Distance from bottom to neck part of flask-like groove, sipe
$\theta 1$. First inclination angle
$\theta 2$. Second inclination angle

**Claims**

1. A heavy-duty tire comprising a tread part,

   the tread part comprising a rubber layer composed of a rubber composition,
   the rubber layer comprising a tread surface,
   the rubber composition comprising: a rubber component comprising an isoprene-based rubber; and a filler comprising silica,
   wherein a content of the isoprene-based rubber in the rubber component is greater than 85% by mass,
   wherein a content of the silica in the filler is greater than 60% by mass, preferably greater than 63% by mass,
   wherein the tread surface of the tread part comprises two or more circumferential main grooves extending continuously in a tire circumferential direction, and a groove depth of a deepest part of the circumferential main grooves is less than 16 mm, preferably 15 nm or less, more preferably less than 14 nm, and
   wherein $A_{IR}$, $A_{SIL}$, and $D_{CG}$ satisfy the following inequality (1), preferably the right side in the following inequality (1) being 360, more preferably 380,

$$(1)\ A_{IR} \times A_{SIL} / D_{CG} > 340$$

   where $A_{IR}$ represents the content, in % by mass, of the isoprene-based rubber in the rubber component, $A_{SIL}$ represents the content, in % by mass, of the silica in the filler, and $D_{CG}$ represents the groove depth, in mm, of the deepest part of the circumferential main grooves.

2. The heavy-duty tire of claim 1, wherein the right side in the inequality (1) is 400, preferably 450, more preferably 460.

3. The heavy-duty tire of claim 1, wherein the right side in the inequality (1) is 500, preferably 510, more preferably 520, further preferably 600.

4. The heavy-duty tire of any one of claims 1 to 3, wherein a hardness of the rubber composition is 64 or more and 80 or less, preferably 65 or more and 75 or less, more preferably 66 or more and 70 or less, further preferably 67 or more and 68 or less.

5. The heavy-duty tire of any one of claims 1 to 4, wherein an average primary particle size of the silica is less than 18 nm, preferably less than 17 nm, more preferably less than 16 nm, further preferably greater than 12 nm and less than 16 nm, further preferably greater than 13 nm and less than 16 nm, further preferably greater than 14 nm and less than 16 nm.

6. The heavy-duty tire of any one of claims 1 to 5, wherein $A_{SIL}$ is greater than 70.

7. The heavy-duty tire of any one of claims 1 to 5, wherein $A_{SIL}$ is greater than 80.

8. The heavy-duty tire of any one of claims 1 to 5, wherein $A_{SIL}$ is greater than 90.

9. The heavy-duty tire of any one of claims 1 to 8, wherein $A_{IR}$ is greater than 90, preferably greater than 92% by mass, more preferably greater than 95% by mass.

10. The heavy-duty tire of any one of claims 1 to 9, wherein $D_{CG}$ is 15.0 or less, preferably 14.8 or less, more preferably 14.6 or less, further preferably 14.4 or less, further preferably 14.2 or less, further preferably 14.0 or less.

11. The heavy-duty tire of any one of claims 1 to 10, wherein the tread surface of the tread part comprises at least one flask-like circumferential groove extending in the tire circumferential direction, and the flask-like circumferential groove comprises a neck part having a narrow groove width, and a trunk part arranged on an inner side in a tire radial direction with respect to the neck part and having a part with a groove width larger than the maximum groove width of the neck part.

12. The heavy-duty tire of any one of claims 1 to 11, wherein the tread surface of the tread part comprises at least one flask-like width direction sipe extending in a tire width direction, and the flask-like width direction sipe comprises a neck part having a narrow groove width, and a trunk part arranged on an inner side in a tire radial direction with respect to the neck part and having a part with a groove width larger than the maximum groove width of the neck part.

13. The heavy-duty tire of any one of claims 1 to 10,

wherein the tread surface of the tread part comprises at least one of at least one flask-like circumferential groove extending in the tire circumferential direction and at least one flask-like width direction sipe extending in a tire width direction,
wherein each of the flask-like circumferential groove and the flask-like width direction sipe comprises a neck part having a narrow groove width, and a trunk part arranged on an inner side in a tire radial direction with respect to the neck part and having a part with a groove width larger than the maximum groove width of the neck part, and
wherein at least one of the flask-like circumferential groove and the flask-like width direction sipe is present on a center region, where, among the two or more circumferential main grooves, a pair of circumferential main grooves located on the outermost sides in the tire width direction is defined as outermost circumferential main grooves, and a region on the inner side in the tire width direction on a tread surface, which is partitioned off by the pair of the outermost circumferential main grooves is defined as the center region.

14. The heavy-duty tire of any one of claims 1 to 13,

wherein the heavy-duty tire comprises a reinforcing layer on an inner side of the tread part in a tire radial direction, and
wherein the reinforcing layer comprises a band ply comprising a helically-wound band cord.

15. The heavy-duty tire of claim 14,

wherein the reinforcing layer comprises a plurality of belt plies comprising many belt cords arranged in parallel, and
wherein at least one layer of the belt plies is arranged on an inner side of the band ply in the tire radial direction.

# FIG. 1

# FIG.2

# FIG. 3

# FIG. 4

# FIG.5

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 331 868 A1 (SUMITOMO RUBBER IND [JP]) 6 March 2024 (2024-03-06) * claims 1-3; table 1 * | 1-15 | INV. B60C1/00 C08K3/36 C08L7/00 |
| A | EP 4 349 617 A1 (SUMITOMO RUBBER IND [JP]) 10 April 2024 (2024-04-10) * claims 1-3; example 9; table 1 * | 1-15 | |
| A | EP 4 299 339 A1 (SUMITOMO RUBBER IND [JP]) 3 January 2024 (2024-01-03) * claims 1-3; table 1 * | 1-15 | |
| A | EP 4 227 358 A1 (SUMITOMO RUBBER IND [JP]) 16 August 2023 (2023-08-16) * claims 1-3; table 1 * | 1-15 | |
| A | EP 4 008 568 A1 (SUMITOMO RUBBER IND [JP]) 8 June 2022 (2022-06-08) * claims 1-3; example 1; table 1 * | 1-15 | |

TECHNICAL FIELDS SEARCHED (IPC)

C08K
B60C
C08L

The present search report has been drawn up for all claims

| Place of search | Date of completion of the search | Examiner |
|---|---|---|
| Munich | 6 August 2025 | Höfler, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
...........................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 16 9926

This annex lists the patent family members relating to the patent documents cited in  the above-mentioned European search report.
The members are as contained in the European Patent Office EDP file on
The European Patent Office is in no way liable for these particulars which are merely given for the purpose of information.

06-08-2025

| Patent document cited in search report | | Publication date | Patent family member(s) | | Publication date |
|---|---|---|---|---|---|
| EP 4331868 | A1 | 06-03-2024 | EP | 4331868 A1 | 06-03-2024 |
| | | | JP | 2024032596 A | 12-03-2024 |
| EP 4349617 | A1 | 10-04-2024 | CN | 117841572 A | 09-04-2024 |
| | | | EP | 4349617 A1 | 10-04-2024 |
| | | | JP | 2024055370 A | 18-04-2024 |
| EP 4299339 | A1 | 03-01-2024 | CN | 117325593 A | 02-01-2024 |
| | | | EP | 4299339 A1 | 03-01-2024 |
| | | | JP | 2024006443 A | 17-01-2024 |
| EP 4227358 | A1 | 16-08-2023 | EP | 4227358 A1 | 16-08-2023 |
| | | | JP | 2023115896 A | 21-08-2023 |
| EP 4008568 | A1 | 08-06-2022 | AU | 2021273607 A1 | 16-06-2022 |
| | | | EP | 4008568 A1 | 08-06-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2024076766 A
- JP 2022114651 A
- JP 2009002594 A
- EP 3427975 A
- JP 6856781 B
- EP 3173251 A

### Non-patent literature cited in the description

- *Akita Prefectural University Web Journal B*, 2019, vol. 6, 216-222
- *Rubber Chemistry and Technology*, 2012, vol. 85 (3), 408-449
- A Comparison of Surface Morphology and Chemistry of Pyrolytic Carbon Blacks with Commercial Carbon Blacks. *Powder Technology*, 2005, vol. 160, 190-193